# EUROPEAN PATENT SPECIFICATION

(11) **EP 2 835 281 B1**
(45) Date of publication and mention of the grant of the patent: **03.06.2020**
(21) Application number: 13772606.3
(22) Date of filing: 02.04.2013
(51) Int. Cl.: B60N 2/70, B60N 2/00, A47C 7/02, A47C 7/62

(54) **SEAT DEVICE**
SITZVORRICHTUNG
DISPOSITIF DE SIÈGE

(30) Priority: 06.04.2012 JP 2012086999
(43) Date of publication of application: 11.02.2015
(73) Proprietor: Fujikura Ltd., Tokyo 135-8512 (JP)
(72) Inventor: NAKAZAKI, Shigeru, Sakura-shi, Chiba 285-8550 (JP)
(74) Representative: Grünecker Patent- und Rechtsanwälte PartG mbB
(86) International application number: PCT/JP2013/060020
(87) International publication number: WO 2013/151023

(56) References cited:
- EP-A2- 1 591 321
- DE-A1- 19 752 976
- JP-A- 2001 133 340
- JP-A- 2001 167 660
- JP-A- 2005 038 828
- JP-A- 2005 081 053
- JP-A- 2005 315 745
- JP-A- 2011 105 278
- US-A1- 2008 191 527

## Description

### Technical Field

The present invention relates to a seat device for a vehicle, for example, and is preferred to a technical field that detects seating.

### Background Art

An alarm system is practically used for one of safety systems for vehicles in which an alarm is given that a seat belt is not worn when a person rides. In the alarm system, an alarm is given in the case where it is detected that the seat belt is not worn in the state in which it is detected that a person is sedated. As a seat device for use in such an alarm system, Patent Document 1 described below is proposed.

The seat device according to Patent Document 1 includes a cushion pad and a cushion frame on which the cushion pad is placed, and two types of seating sensors are provided between the cushion pad and the cushion frame.

A first seating sensor is disposed on the center part of a seating region between the cushion pad and the cushion frame and formed of a push button switch and a flat plate pressure sensing unit. The flat plate pressure sensing unit is configured in which the pressure sensing unit is laid over the switch and is not contacted with the switch when the pressure sensing unit is not pressed.

On the other hand, a second seating sensor is a sheet-like membrane switch disposed on the front end peripheral portion of the seating region between the cushion pad and the cushion frame. The membrane switch is integrally formed as an insulating spacer is sandwiched between an upper electrode sheet and a lower electrode sheet in which a plurality of pairs of contacts is disposed on the electrode sheets through an opening provided on the spacer and the contacts are pressed to conduct electricity.

This seat device is configured in which the detection state is maintained as long as any one of the first seating sensor and the second seating sensor is in the detection state, so that detection can be achieved even though the seating position or the seating attitude is changed.

### Citation List

### Patent Document

[Patent Document 1] JP-A-2008-183976

### Summary of Invention

### Objects to be Achieved by the Invention

However, the seat device according to Patent Document 1 has a problem in that the configuration of the seat device becomes complicated because the seating sensors in different configurations are necessary. Moreover, the seat device according to Patent Document 1 has a problem in that in the case where different cushion pads are used, some cushion pad is not sometimes enabled to appropriately detect a load.

Therefore, it is an object of the present invention to provide a seat device that can share a seating sensor and appropriately detect seating in a simpler configuration even though different cushion pads are used.

### Means for Achieving the Objects

The present inventor dedicatedly investigated in order to solve the problems. As a result, the present inventor found the tendency of the directional property of a pressure applied to the lower face of the cushion pad. That is, the pressure applied to the lower face of the cushion pad caused by seating tends to spread in a band shape in the lateral direction because of the shape of the buttocks even though any cushion pads are used. On the other hand, since the shape of the lower face is different for every cushion pad, such a tendency is obverted that a pressure spreading in a band shape in the lateral direction is displaced in the longitudinal direction according to the shape of the lower face.

Therefore, it was thought that there is the case where a pressure that spreads in a band shape in the lateral direction of a certain cushion pad is displaced in the longitudinal direction and is not transmitted to the seating sensor even though the seating sensor is disposed at a common position in any cushion pads. Moreover, it was thought that there is the case where even though a groove in a circular shape is provided on the lower face of the cushion pad as described in Patent Document 1, a pressure that spreads in a band shape in the lateral direction of a certain cushion pad is displaced in the longitudinal direction and is not transmitted to the groove in the first place as similar to the description above.

Therefore, as a result of more dedicated investigations, the present inventor conceived the present invention that can solve the problems.

That is, a seat device according to the present invention is defined by the technical features set forth in claim 1.

According to this seat device, it is confirmed from experiments conducted by the present inventor that the pressure applied to the lower face of the cushion pad caused by seating is concentrated on the groove for concentrating the pressing force. That is, even though a cushion pad is different and a pressure spreading in a band shape in the lateral direction is displaced in the longitudinal direction of the cushion pad, the pressure can be detected at any one portion of the groove. When the pressure is then detected on any one portion of the groove, the pressure propagates through the entire groove, and the entire groove is bent as the portion is a base point. Therefore, in the case of the seat device according to the present application, even though a different cushion pad is used, the pressure sensitive switch disposed in the space of the groove extending in the longitudinal direction of the cushion pad is applied with the pressing force similarly as the seating position is located on the seating face portion by bending the entire groove. In other words, the groove that the ratio between the groove width and the groove length is 1 : 2 or greater is provided for simply disposing the sensor as well as acts on the pressure sensitive switch for concentrating the pressing force in which a pressure spreading in the lateral direction of the cushion pad is concentrated and propagated along the length direction of the groove. As described above, as long as the ratio between the groove width and the groove length is 1 : 2 or greater in the groove, the seating sensor can be shared even though a different cushion pad is used, and as a result, the seat device that can appropriately detect seating is achieved in a simpler configuration.

It is noted that suppose that in the case where the groove that the ratio between the groove width and the groove length is not 1 : 2 or greater is formed on the lower face of the cushion pad, it is hardly enabled to detect a pressure displaced in the longitudinal direction when a cushion pad is different, and the groove does not substantially act on the pressure sensitive switch for concentrating the pressing force. This is also confirmed from experiments conducted by the present inventor.

Moreover, a gap is formed between the groove and the pressure sensitive switch. The gap being formed in this manner, it is possible to reduce such a faulty detection that the pressure sensitive switch is turned on due to a pressure applied to the cushion pad when a thing, for example, lighter than a person is placed, as compared with the case where no gap is provided. A gap is provided because the pressure sensitive switch is disposed in the space of the groove acting on the pressure sensitive switch for concentrating the pressing force.

Furthermore, preferably, the plurality of the pressure sensitive switches is aligned in the longitudinal direction of the cushion pad and disposed in the space of the groove, and the plurality of the pressure sensitive switches is electrically connected in parallel with each other.

In the case where a plurality of the pressure sensitive switches is aligned in the lateral direction of the cushion pad, such a tendency is observed that a difference is produced between a pressure applied to a pressure sensitive switch near the center of the cushion pad and a pressure applied to a pressure sensitive switch distant from the center. On this point, in the case where a plurality of the pressure sensitive switches is aligned in the longitudinal direction of the cushion pad, pressures can be equally applied to the pressure sensitive switches by the groove acting on the pressure sensitive switches for concentrating the pressing force, so that it is possible to appropriately detect seating, as compared with the case where a plurality of the pressure sensitive switches is aligned in the lateral direction of the cushion pad.

Moreover, seating can be detected when any one of the pressure sensitive switches is turned on by electrically connecting a plurality of the pressure sensitive switches in parallel with one another, so that it is possible to improve the sensitivity of the detection of the seating. In addition to this, even though a certain pressure sensitive switch is broken, the remaining pressure sensitive switches can detect seating, so that it is possible to provide a longer lifetime for the seating sensor. Meanwhile, it is also confirmed from experiments conducted by the present inventor that the difference in the deformed amount is increased at the front portion and the rear portion of the groove to which a pressure is applied from the seating face side as the length of the groove becomes longer. Therefore, in the case where a plurality of the pressure sensitive switches is aligned in the longitudinal direction of the cushion pad, it is more specifically useful that the pressure sensitive switches are electrically connected in parallel with each other from the viewpoint of appropriately detecting seating regardless of the length of the groove.

Furthermore, preferably, a plurality of the grooves is formed, and one or a plurality of the pressure sensitive switches is disposed in spaces of the grooves.

Moreover, preferably, the pressure sensitive switch includes an insulating sheet, the plurality of the grooves is formed in a state in which the grooves are not joined to each other, and the insulating sheets of the pressure sensitive switches individually disposed in the spaces of the grooves are joined to each other across the grooves.

In the case where this configuration is provided, the insulating sheet portions joined across the groove are fixed by sandwiching the insulating sheet portions between the cushion pad and the member supporting the cushion pad, so that it is possible to reduce such an event that the pressure sensitive switches are moved in the groove.

Furthermore, preferably, one or a plurality of the pressure sensitive switches disposed in a space of one of the grooves is formed in a set, and the sets are electrically connected in serial to each other.

In the case where this configuration is provided, seating is not detected until the pressure sensitive switches individually disposed in the grooves are turned on. Thus, it is possible to greatly reduce the detections of seating when a small article or the like is placed on the cushion pad. Therefore, it is possible that a faulty detection is reduced to further appropriately detect seating.

Furthermore, preferably, the plurality of the grooves is formed in bilateral symmetry relative to a vertical plane passing through a center in a direction orthogonal to the longitudinal direction of the cushion pad.

As described above, the pressure applied to the lower face of the cushion pad caused by seating tends to spread in a band shape in the lateral direction because of the shape of the buttocks even though any cushion pads are used. Moreover, a person takes a seat in the center of the cushion pad in the crosswise direction. On this point, in the case where a plurality of the grooves is formed in bilateral symmetry relative to the center of the cushion pad in the crosswise direction, a pressure can be generally equally applied to the grooves, and as a result, it is possible to appropriately detect seating.

### Effect of Invention

As described above, according to the present invention, it is possible to achieve a seat device that can share a seating sensor and appropriately detect seating in a simpler configuration even though different cushion pads are used.

### Brief Description of Drawings

FIG. 1 is a schematic perspective view of a seat device according to a first embodiment.
FIG. 2 is a perspective view of the configuration of a seating sensor.
FIGS. 3A and 3B are a diagram of the seating sensor seen from the upper side and a diagram of a cross section of the seating sensor.
FIG. 4 is a diagram of the equivalent circuit of the seating sensor.
FIG. 5 is a diagram of the seat device seen from right above.
FIG. 6 is a diagram of a cross section taken along line V-V in FIG. 5.
FIG. 7 is a diagram of a cross section taken along line Z-Z in FIG. 5.
FIG. 8 is a diagram of a cross section of a simulation model.
FIGS. 9A and 9B are diagrams of a displacement amount on the lower face of a seat pad in the case where no groove is formed on the simulation model and in the case where grooves are formed on the simulation model.
FIG. 10 is a diagram of pressure distributions based on the simulation model in FIG. 8.
FIG. 11 is a diagram of a manner that a pressure sensitive switch is turned on at a viewpoint the same as the viewpoint in FIG. 6.
FIG. 12 is a diagram of a seating sensor according to a second embodiment.
FIG. 13 is a diagram of a seat device according to the second embodiment seen from right above.
FIG. 14 is a diagram of a cross section of the seat device according to the second embodiment seen from a viewpoint the same as the viewpoint in FIG. 6.
FIG. 15 is a diagram of a pressure sensitive switch according to the second embodiment that is turned on at a viewpoint the same as the viewpoint in FIG. 14.
FIGS. 16A and 16B are diagrams of a mounting member according to a third embodiment.
FIG. 17 is a diagram of the configuration of a seating sensor at a viewpoint the same as the viewpoint in FIG. 12.
FIG. 18 is a diagram of a face including a spring groove of a reinforcement member.
FIG. 19 is a diagram of a cross section taken along line X-X in FIG. 17.
FIG. 20 is a diagram of a seat device according to the third embodiment seen from right above.
FIGS. 21A and 21B are diagrams of a longitudinal cross section of a groove portion of a cushion pad.
FIG. 22 is a schematic diagram for explaining the relationship between the opening of a spacer and a cushion member.

### Description of Embodiments

### (1) First Embodiment

A first embodiment preferred to a seat device according to the present invention will be described in detail with reference to the drawings.

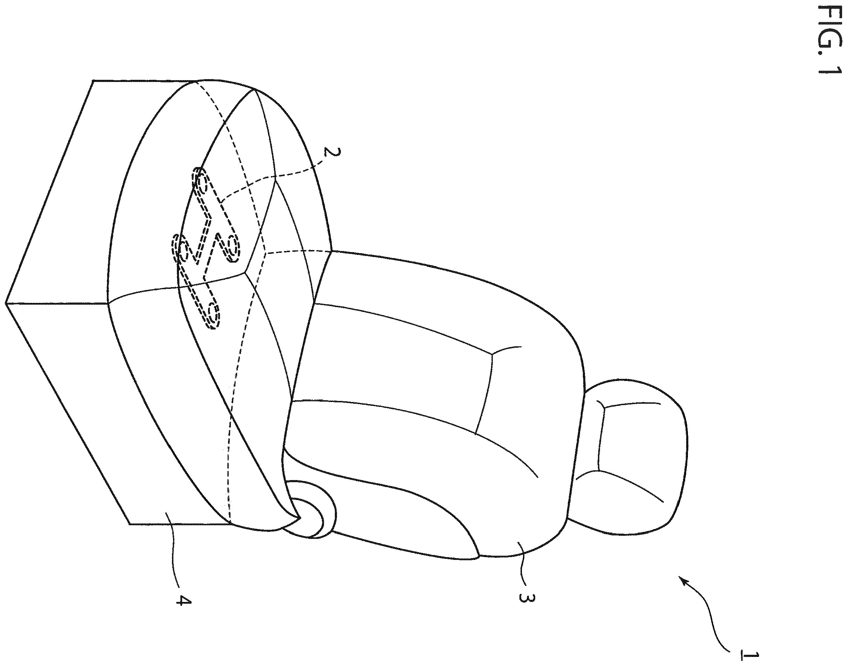

FIG. 1 is a schematic perspective view of a seat device 1 according to the first embodiment. As illustrated in FIG. 1, the seat device 1 according to the first embodiment includes a seating sensor 2, a cushion pad 3, and a metal sheet pan 4 that is a mounting member for the cushion pad 3 as main components.

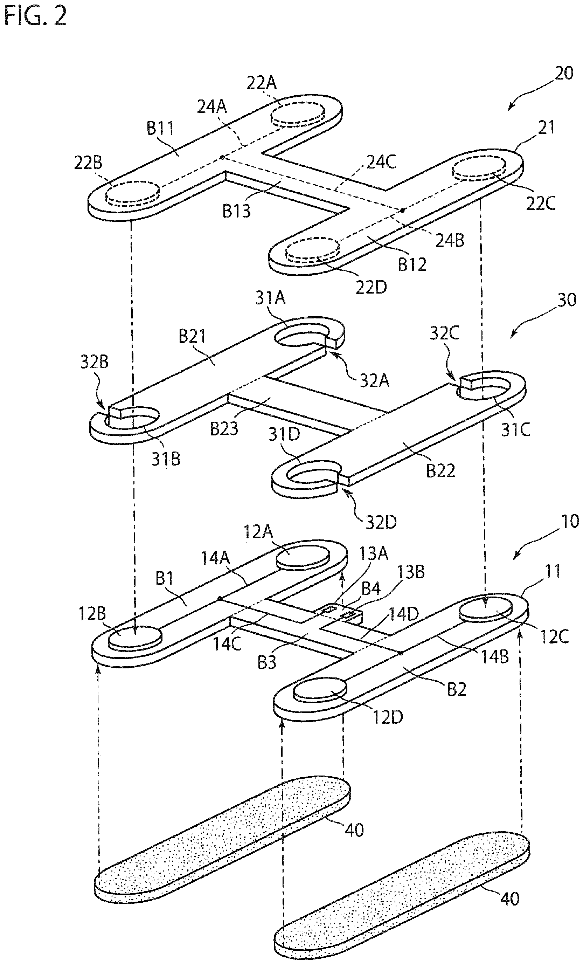

FIG. 2 is a perspective view of the configuration of the seating sensor 2. As illustrated in FIG. 2, the seating sensor 2 includes a first electrode sheet 10, a second electrode sheet 20, a spacer 30, and a cushion member 40 as main components.

The first electrode sheet 10 includes a first insulating sheet 11, a plurality of first electrodes 12A to 12D, and terminals 13A and 13B.

The first insulating sheet 11 is a film insulating sheet having flexibility in an H-shape, for example. In the case of the embodiment, the first insulating sheet 11 is formed of a main block B1 on which the first electrodes 12A and 12B are disposed, a main block B2 on which the first electrodes 12C and 12D are disposed, a first sub-block B3 that joins the main blocks B1 and B2 to each other, and a second sub-block B4 on which the terminals 13A and 13B are disposed. The main blocks B1 and B2 are a nearly rectangular block. On the one hand, the first sub-block B3 is a nearly rectangular block that joins the intermediate portions of the main blocks B1 and B2 to each other in the longitudinal direction. On the other hand, the second sub-block B4 is a nearly rectangular block that is smaller than the first sub-block B3 and projects from the end portion of the intermediate portion of the first sub-block B3 in the longitudinal direction. The material of the first insulating sheet 11 includes a resin such as polyethylene terephthalate (PET), polybutylene terephthalate (PBT), or polyethylene naphtahalate (PEN).

The first electrodes 12A to 12D are conductive layers and are metal print layers in a nearly circular shape, for example. The first electrodes 12A and 12B are disposed on one surface of the main block B1, and are aligned on the same linear line in the embodiment. The first electrodes 12C and 12D are disposed on the same surface on which the first electrodes 12A and 12B are disposed in the main block B2, and are aligned on the same linear line in the embodiment.

The terminals 13A and 13B are conductive layers, and are nearly rectangular metal sheets, for example. Moreover, the terminals 13A and 13B are disposed on the same surface on which the first electrodes 12A to 12D are disposed in the second sub-block B4.

The first electrode 12A is electrically connected to the first electrode 12B through a first wire 14A, and the first electrode 12C is electrically connected to the first electrode 12D through a first wire 14B. Furthermore, the first wire 14A is electrically connected to the terminal 13A through a first wire 14C, and the first wire 14B is electrically connected to the terminal 13B through a first wire 14D.

The second electrode sheet 20 includes a second insulating sheet 21 and a plurality of second electrodes 22A to 22D.

The second insulating sheet 21 is a film insulating sheet having flexibility in an H-shape, for example. In the case of the embodiment, the second insulating sheet 21 is formed of a main block B11 on which the second electrodes 22A and 22B are disposed, a main block B12 on which the first electrodes 12C and 12D are disposed, and a first sub-block B13 that joins the main blocks B11 and B12 to each other. The main blocks B11 and B12 are formed in the same shape and the same size as the main blocks B1 and B2 of the first insulating sheet 11. Moreover, the first sub-block B13 is formed in the same shape and the same size as the first sub-block B3 of the first insulating sheet 11. The material of the second insulating sheet 21 includes a resin such as PET, PBT, or PEN similarly to the first insulating sheet 11. However, the material of the second insulating sheet 21 may be the same as or may be different from the material of the first insulating sheet 11.

The second electrodes 22A to 22D are conductive layers and are metal print layers in a nearly circular shape, for example. The second electrodes 22A and 22B are disposed on one surface of the main block B11, and the second electrodes 22C and 22D are disposed on the same surface on which the second electrodes 22A and 22B are disposed in the main block B12. In the case of the embodiment, the sizes of the second electrodes 22A to 22D are the same as the sizes of the first electrodes 12A to 12D. Moreover, the positions at which the second electrodes 22A and 22B are disposed are relatively the same positions as the positions at which the first electrodes 12A and 12B are disposed with respect to the main block B1, and the positions at which the second electrodes 22C and 22D are disposed are relatively the same positions as the positions at which the first electrodes 12C and 12D are disposed with respect to the main block B1.

The second electrode 22A is electrically connected to the second electrode 22B through a second wire 24A, the second electrode 22C is electrically connected to the second electrode 22D through a second wire 24B, and the second wire 24A is electrically connected to the second wire 24B through a second wire 24C.

The spacer 30 is a film insulating sheet, and includes a plurality of openings 31A to 31D. In the case of the embodiment, the spacer 30 is formed in an H-shape, for example, and includes a main block B21 on which the openings 31A and 31B are formed, a main block B22 on which the openings 31C and 31D are formed, and a first sub-block B23 that joins the main blocks B21 and B22 to each other. The main blocks B21 and B22 are formed in the same shape and the same size as the main blocks B1 and B2 of the first insulating sheet 11, and the first sub-block B23 is formed in the same shape and the same size as the first sub-block B3 of the first insulating sheet 11. The material of the spacer 30 includes a resin such as PET, PBT, or PEN similarly to the first insulating sheet 11 and the second insulating sheet 21. However, the material of the spacer 30 may be the same as or may be different from the material of the first insulating sheet 11 or the second insulating sheet 21.

The edge shape of the openings 31A to 31D is in a nearly circular shape, for example, and the diameters of the openings 31A to 31D are slightly smaller than the diameters of the first electrodes 12A to 12D. Moreover, the positions at which the openings 31A and 31B are disposed are relatively the same positions as the positions at which the first electrodes 12A and 12B are disposed with respect to the main block B1, and the positions at which the openings 31C and 31D are disposed are relatively the same positions at which the first electrodes 12C and 12D are disposed with respect to the main block B2.

The openings 31A to 31D are formed with slits 32A to 32D that spatially and externally connect the spacer 30. That is, one ends of the slits 32A to 32D are joined to the corresponding openings 31A to 31D, and the other ends are opened to the lateral side of the spacer 30.

The cushion member 40 is an elastic member that is deformed so as to become flat when a pressure is applied, and is formed of a sponge resin in which a large number of holes are provided, nonwoven fabric having cobwebbing resin fiber, or rubber, for example. The material of the cushion member 40 includes silicon, polyester, urethane, or the like. In the case of the embodiment, the cushion member 40 is in a nearly rectangular parallelepiped shape, and the wide face is the same as the wide face of the main block B1 of the first insulating sheet 11, for example.

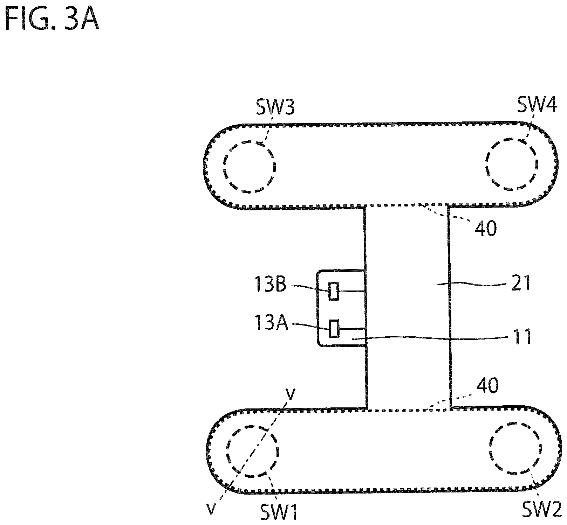

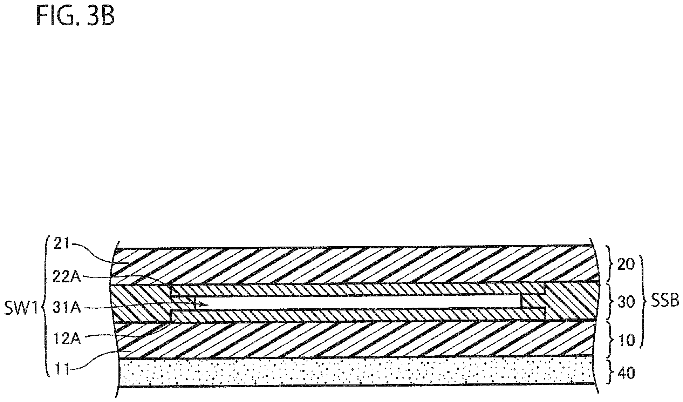

FIGS. 3A and 3B are a diagram of the seating sensor 2 seen from the upper side and a diagram of a cross section of the seating sensor 2. More specifically, FIG. 3A is a diagram of the seating sensor 2 seen from the upper side, and FIG. 3B is a diagram of the cross section taken along line V-V in FIG. 3A.

As illustrated in FIG. 3B, the first electrode sheet 10 is attached to one face of the spacer 30, the second electrode sheet 20 is attached to the other face of the spacer 30, and a single structure (in the following, referred to as a sheet structure) SSB is configured.

In the sheet structure SSB, a pressure sensitive switch SW1 is configured of a part of a pair of the insulating sheets 11 and 21, the spacer portion provided between the sheet portions, and a pair of the electrodes 12A and 22A opposite to each other through the opening 31A provided on the spacer portion. It is noted that parts of the insulating sheets 11 and 21 means a portion on which at least the electrode is disposed.

Moreover, in the sheet structure SSB, pressure sensitive switches SW2 to SW4 illustrated in FIG. 3A are configured similarly to the pressure sensitive switch SW1. It is noted that the insulating sheets and the spacer, which are the components of the pressure sensitive switches SW1 to SW4, are parts of the insulating sheets 11 and 21 and a part of the spacer 30 in the embodiment. However, separate insulating sheets and a separate spacer for the portions may be joined to one another using a predetermined joining device.

In the first insulating sheet 11 of the sheet structure SSB, the face on the opposite side of the face facing the spacer 30 is the lower face. The cushion member 40 that covers the openings 31A and 31B through the first insulating sheet 11 is attached to the main block B1 (FIG. 2), which is the lower face. On the other hand, the cushion member 40 that covers the openings 31C and 31D through the first insulating sheet 11 is attached to the main block B2 (FIG. 2), which is the lower face of the first insulating sheet 11.

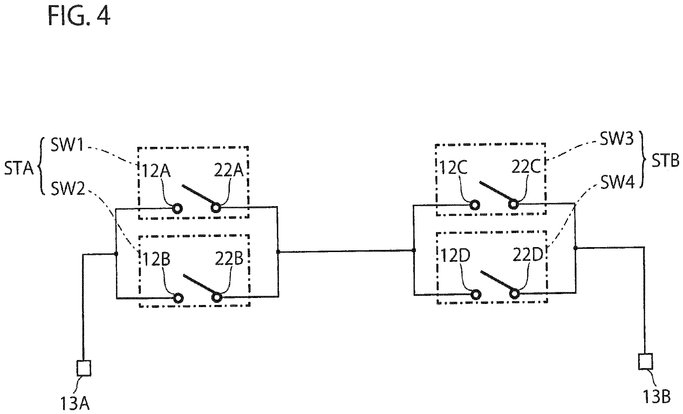

FIG. 4 is a diagram of the equivalent circuit of the seating sensor 2. As illustrated in FIG. 4, a set STA of the pressure sensitive switches SW1 and SW2 is connected in parallel with a set STB of the pressure sensitive switches SW3 and SW4. Moreover, the sets STA and STB are connected in serial to each other, and are disposed between a pair of the terminals 13A and 13B.

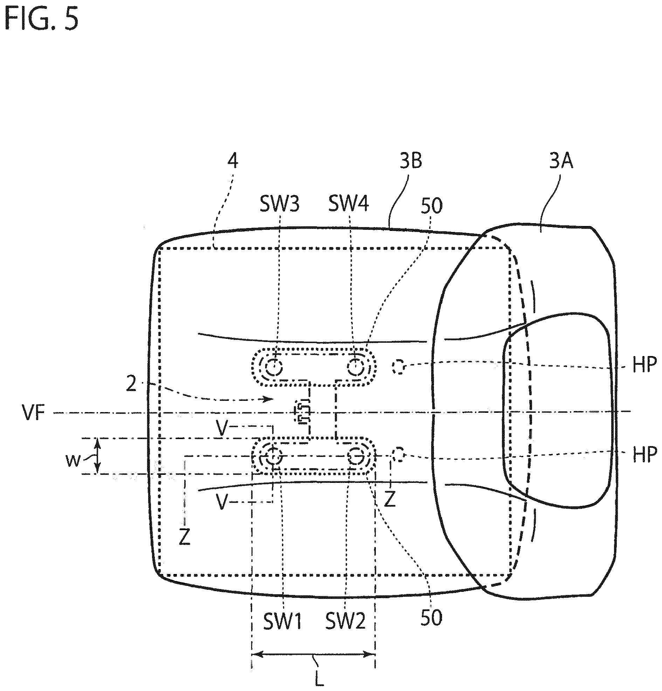

FIG. 5 is a diagram of the seat device 1 seen from right above. As illustrated in FIG. 5, the seating sensor 2 is fixed to the placement face of the sheet pan 4, and the cushion pad 3 is placed on the placement face. It is noted that it may be fine that the seating sensor 2 is fixed to the sheet pan 4 by attaching the lower face of the cushion member (illustrated in FIG. 3B) to the sheet pan 4 with an adhesive, or fixed to the sheet pan 4 by pressing the portion of the first sub-block B23 (FIG. 2) with the cushion pad 3.

The cushion pad 3 includes a backrest part 3A and a seat part 3B as main components. The backrest part 3A and the seat part 3B are elastic members that are deformed so as to become flat when a pressure is applied, and are joined to each other using a predetermined joining device. It is noted that the material of the elastic member includes urethane foam, for example.

The lower face of the seat part 3B is formed with a vertical groove 50 extending in the longitudinal direction of the cushion pad 3 (in the following, referred to as a recess). According to the invention, the recess 50 is disposed in a region located on the inner side with respect to the peripheral portion of the bottom face of the seat part 3B. Moreover, the center of the recess 50 in the longitudinal direction is formed at a position on the front side with respect to a hip point HP in the case where a person normally takes a seat and formed in bilateral symmetry relative to a vertical plane VF passing through the center of the seat part 3B in the crosswise direction.

It is noted that the phrase "a person normally takes a seat" means that a person takes a seat in the state in which the back contacts the backrest part 3A and the buttocks are located deeply to the back of the seat part 3B. The term "hip point" means the lowermost portion of the buttocks of a person who takes a seat.

According to the invention, a width W of the recess 50 (the length in the direction parallel with the lateral direction of the cushion pad 3) is defined as one, the ratio of a length L of the recess 50 (the length in the direction parallel with the longitudinal direction of the cushion pad 3) is two or greater. In the case of the embodiment, the width W of the recess 50 is defined as the width in which two electrodes configuring the pressure sensitive switch are not enabled to be aligned in the crosswise direction of the recess 50, and the length L of the recess 50 is defined as the length in which two electrodes configuring the pressure sensitive switch or more are enabled to align in the longitudinal direction of the recess 50. More specifically, the width W of the recess 50 is defined as about 45 mm, for example, and the length L of the recess 50 is defined as about 140 mm, for example. Moreover, the recess 50 according to the embodiment is in a nearly rectangular parallelepiped shape, for example.

In the recess 50, the pressure sensitive switch SW1 is disposed on one end portion of the recess 50 on the left side, and the pressure sensitive switch SW2 is disposed on the other end portion of the recess 50. Furthermore, the pressure sensitive switch SW3 is disposed on one end portion on the right side, and the pressure sensitive switch SW4 is disposed on the other end portion of the recess 50.

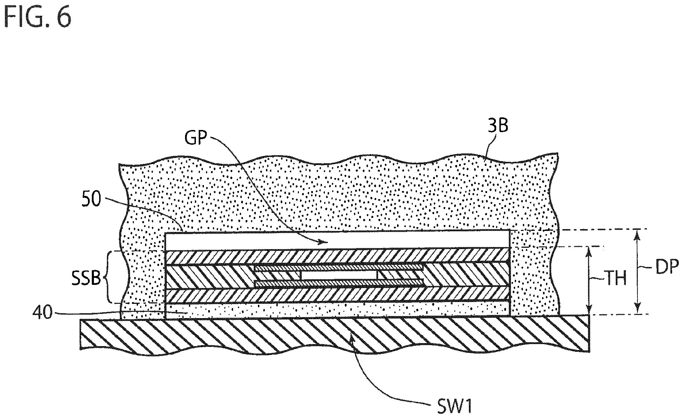

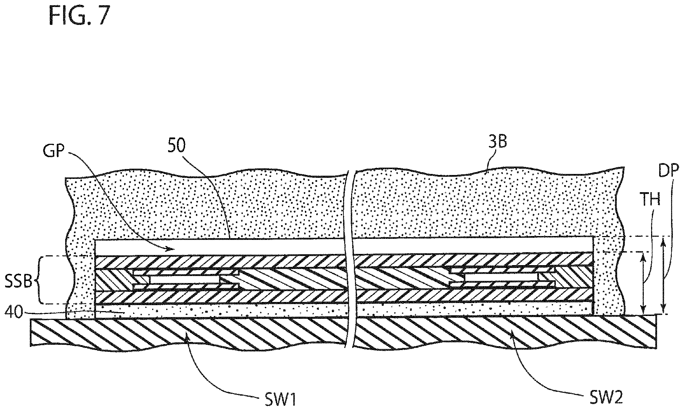

FIG. 6 is a diagram of a cross section taken along line V-V in FIG. 5. FIG. 7 is a diagram of a cross section taken along line Z-Z in FIG. 5. As illustrated in FIGS. 6 and 7, a depth DP of the recess 50 is greater than a thickness TH of the sheet structure SSB and the cushion member 40, and a gap GP is formed between the top face of the sheet structure SSB and the bottom face of the recess 50. The gap GP is formed in the same thickness from the pressure sensitive switches SW1 to the pressure sensitive switch SW2 without being discontinued. Moreover, a distance from the bottom face of the recess 50 to the second insulating sheet portions B11 and B12 (FIG. 2) configuring the pressure sensitive switches SW1 and SW2 is generally made constant, and the bottom face is nearly in parallel with the sheet faces of the second insulating sheet portions B11 and B12.

It is noted that the side face of the recess 50 illustrated in FIGS. 6 and 7 is in contact with the side face of the seating sensor portion. However, a gap may be provided between the side faces. However, from the viewpoint of preventing the position displacement among the pressure sensitive switches SW1 to SW4 or from the viewpoint of reinforcing the fixed state between the seat part 3B and the seating sensor portion, it is preferable that the side face of the recess 50 be in contact with the side face of the seating sensor portion.

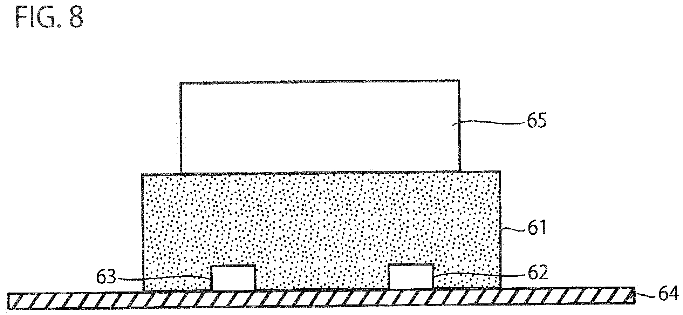

FIG. 8 is a diagram of a cross section of a simulation model. As illustrated in FIG. 8, the simulation model is a model in which a seat pad 61 is placed on a mounting stage 64 and a load product 65 is disposed on the seat pad 61 in the state in which grooves 62 and 63 formed on the lower face of the seat pad 61 face the placement face of the mounting stage 64.

The seat pad 61 is one that assumes the seat part 3B of the cushion pad 3 according to the embodiment, and the mounting stage 64 is one that assumes the sheet pan 4. The size of the seat pad 61 was formed in the size of 500 mm × 500 mm × 200 mm. The weight of the load product 65 was set to 120 kg.

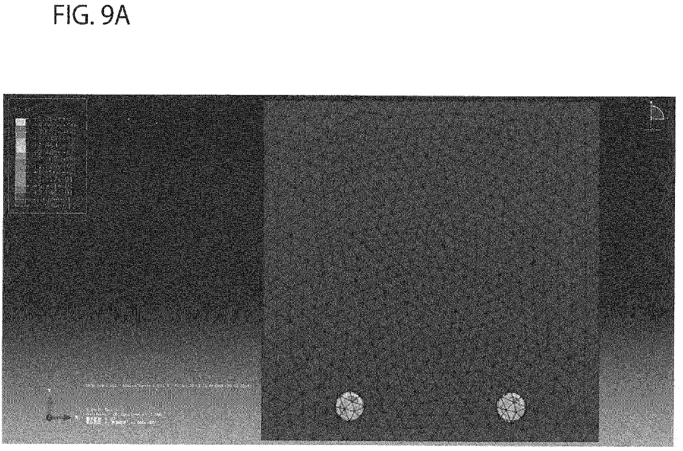

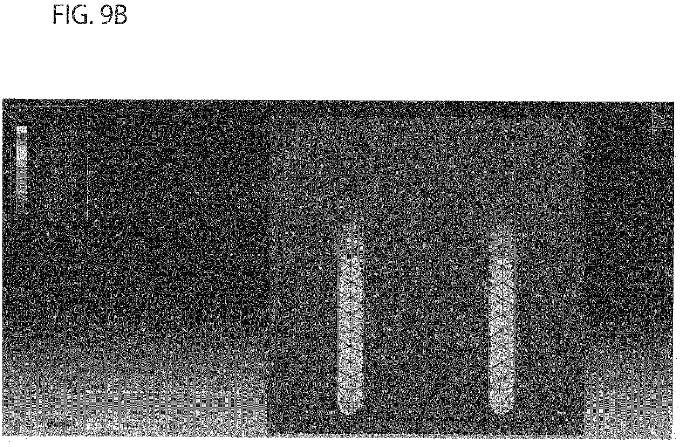

FIGS. 9A and 9B are diagrams of displacement amounts on the lower face of the seat pad in the simulation model in the case where the grooves 62 and 63 are not formed and in the case where the grooves 62 and 63 are formed. More specifically, FIG. 9A is the case where the grooves 62 and 63 are not formed in the simulation model, and FIG. 9B is the case where the grooves 62 and 63 are formed in the simulation model.

It is noted that in FIG. 9A, a circular groove having a diameter of 45 mm is formed on the lower face of the seat pad in a 180 mm distance in the longitudinal direction of the seat pad 61 instead of the grooves 62 and 63 of the simulation model. Moreover, in FIGS. 9A and 9B, a load is applied from the center of the lower end on the paper surface.

As illustrated in FIGS. 9A and 9B, since a region on which the grooves on the lower face of the seat pad 61 are not formed contacts the mounting stage 64, no displacement is taken place in the region even though the load is applied. On the other hand, a displacement is taken place in a region in which the grooves are formed. As apparent from the comparison between FIG. 9A and FIG. 9B, in the case where the groove in a circular shape is formed, the displacement disappears when the groove is apart from the portion to which the load is applied, whereas in the case where the grooves 62 and 63 extending in the longitudinal direction of the seat pad 61 are formed, the displacement is taken place along the grooves 62 and 63 even through the grooves are apart from the portion to which the load is applied.

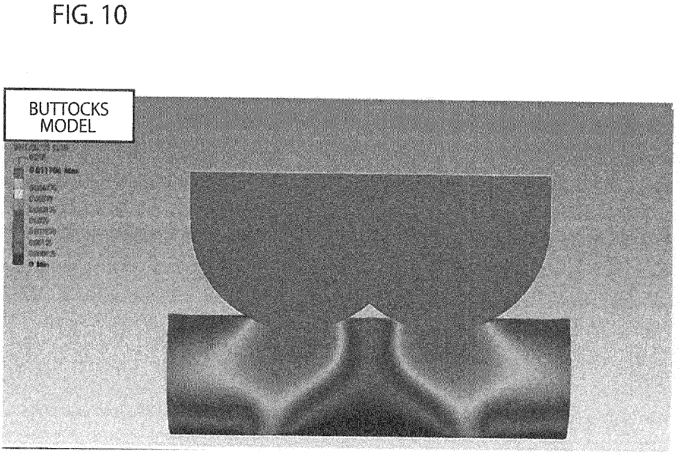

FIG. 10 is a diagram of pressure distributions in the simulation model in FIG. 8. As illustrated in FIG. 10, pressures distributed in the lateral direction of the seat pad 61 spread to the vicinities of the left and right ends on the lower face of the seat pad 61 even though the grooves 62 and 63 are formed.

In contrast, although not illustrated in the drawing here, pressures distributed in the longitudinal direction of the seat pad 61 are different in the groove portions between the case where the grooves 62 and 63 are not formed and the case where the grooves 62 and 63 are formed, and the pressures are more widely distributed in the groove portions in the longitudinal direction in the case where the grooves 62 and 63 are formed than in the case where the grooves 62 and 63 are not formed. As apparent from FIGS. 9A and 9B, this is because in the case where the grooves 62 and 63 are formed, a pressure displacement is taken place to distant places along the grooves 62 and 63.

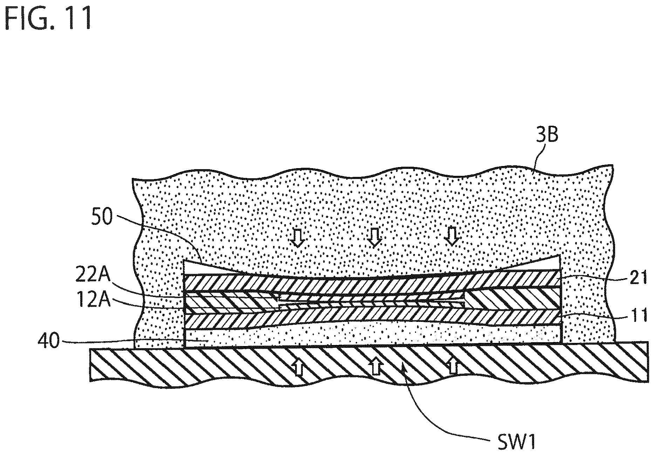

FIG. 11 is a diagram of the manner that the pressure sensitive switch SW1 is turned on at a viewpoint the same as the viewpoint in FIG. 6. As illustrated in FIG. 11, when a person takes a seat on the cushion pad 3 of the seat device 1 according to the embodiment, pressures are applied to the seating sensor 2 from both of the seat part 3B and the sheet pan 4 (see arrows).

The bottom portion of the recess 50 is deformed so as to bend the upper side of the seating sensor 2, and the second insulating sheet 21 is pressed downwardly. On the other hand, the cushion member 40 is provided on the lower side of the seating sensor 2. Therefore, the cushion member 40 is deformed as similar to the upper side of the seating sensor 2 regardless of the hardness of the sheet pan 4, and the first insulating sheet 11 is pressed upwardly. It is noted that the pressed amount can be adjusted by the thickness or the material of the cushion member 40.

Since the first insulating sheet 11 and the second insulating sheet 21, which are pressed in this manner, have flexibility, the first insulating sheet 11 and the second insulating sheet 21 are bent so as to enter the opening 31A of the spacer 30. The first insulating sheet 11 and the second insulating sheet 21 are bent in this manner, the first electrode 12A is electrically connected to the second electrode 22A to be in the conducting state, which are opposite to each other through the opening 31A. Thus, the pressure sensitive switch SW1 is turned on.

In the case of the embodiment, the slit 32A (FIG. 2) that communicates the opening with the outside is formed on the opening 31A of the spacer 30 sandwiched between the first electrode 12A and the second electrode 22A.

Thus, air in the opening 31A is discharged through the slit 32A without remaining in the opening when the second insulating sheet 21 is bent. In other words, it is avoided that air in the opening 31 suppresses the deformation of the first insulating sheet 11 and the second insulating sheet 21. Therefore, as compared with the case where the slit 32A is not formed, the first electrode 12A easily contacts the second electrode 22A, and the sensitivity of the pressure sensitive switch SW1 itself can be improved.

Moreover, in the case of the embodiment, the gap GP is formed between the recess 50 and the second insulating sheet 21, which is the upper side of the seating sensor 2.

Thus, as compared with the case where the gap GP is not provided, it is possible to reduce such a faulty detection that the pressure sensitive switch SW1 is turned on due to a pressure applied to the cushion pad 3 when a thing, for example, lighter than a person is placed. In the case of the embodiment, since the pressure sensitive switch SW1 is disposed in the recess 50 on which a pressure applied to the cushion pad 3 is concentrated, the provision of the gap GP is more specifically useful. In addition to this, the gap GP is formed in the same thickness from the pressure sensitive switches SW1 to the pressure sensitive switch SW2 without being discontinued, so that a pressure applied to the cushion pad 3 can be similarly concentrated on the pressure sensitive switches SW1 and SW2 disposed in the recess 50. Moreover, adjustment can be made according to the size of the gap GP in such a manner that the pressure sensitive switch SW1 is turned on due to a pressure applied to the cushion pad 3 when a person takes a seat. Therefore, it is possible to structurally reduce a faulty detection with no dependence on the electrical determination of a faulty detection.

It is noted that the matters described on the pressure sensitive switch SW1 are similarly applicable to the other pressure sensitive switches SW2 to SW4.

As described above, in the seat device 1 according to the embodiment, as illustrated in FIG. 6, the recess 50 is formed as the groove extending in the longitudinal direction of the cushion pad 3, and the pressure sensitive switch SW1 is disposed in the space of the recess 50.

In this seat device 1, in the case where a pressure is applied from the seating face side to the cushion pad 3, as illustrated in FIGS. 9A and 9B, the pressure is displaced along the recess 50 on the lower face of the seat part 3B, and the pressure is concentrated on the recess 50.

On the other hand, it is confirmed from experiments conducted by the present inventor that in the case where this groove is not formed as described above, a pressures distributed in the longitudinal direction from the seating position of the cushion pad is distributed and is unlikely to be transmitted in the longitudinal direction.

Thus, in the case of the seat device 1 according to the present application, a pressure is applied to any one portion of the recess 50 even though a pressure spreading in a band shape in the lateral direction is displaced in the longitudinal direction of the cushion pad 3 because the cushion pad 3 is different. When a pressure is then applied to any one portion of the recess 50, the pressure entirely propagates along the recess 50 as this portion is the base point, and the recess 50 is bent.

Therefore, in the case of the seat device 1 according to the present application, even though a different cushion pad 3 is used, the pressure sensitive switch SW1 disposed in the space of the recess 50 extending in the longitudinal direction of the cushion pad 3 is applied with the pressing force by bending the recess 50 entirely the same as the pressing force when the seating position is located on the seating face portion. In other words, the recess 50 extending in the longitudinal direction of the cushion pad 3 acts on the pressure sensitive switch SW1 for simply disposing the sensor as well as for concentrating the pressing force. Therefore, it is possible to improve the sensitivity of the pressure sensitive switch even though a pressure sensitive switch in a different configuration is not used purposely, or a single pressure sensitive switch is provided. Thus, even though a different cushion pad 3 is used, the seat device 1 that can share the seating sensor and appropriately detect seating can be achieved in a simpler configuration.

It is noted that as described above, a pressure distributed in the lateral direction of the cushion pad 3 spreads to the vicinities of the left and right ends on the lower side of the cushion pad regardless whether the groove is formed. Thus, suppose that even in the case where a horizontal groove extending in the lateral direction of the cushion pad 3 is formed on the lower face of the cushion pad 3 instead of the recess 50, the groove does not act on the pressure sensitive switch SW1 for concentrating the pressing force. This is also confirmed from experiments conducted by the present inventor.

Moreover, in the case of the embodiment, as illustrated in FIG. 5, two pressure sensitive switches SW1 and SW2 are disposed in the space of the recess 50.

As described above, the pressure applied to the lower face of the cushion pad caused by seating is concentrated on the recess 50 extending in the longitudinal direction of the cushion pad 3. Thus, such a tendency is observed that in the case where a large number of recesses are formed, a pressure is concentrated on recesses near the center of the cushion pad 3, whereas it is difficult to apply a pressure to recesses distant from the center. On this point, in the case where the pressure sensitive switches SW1 and SW2 are disposed in the space of the recess 50 as in the embodiment, it is possible that the number of recesses to be formed on the lower face of the cushion pad is reduced and a pressure is reliably concentrated on the recesses, as compared with the case where a single recess is formed for a single pressure sensitive switch SW1 or SW2. As a result, it is possible to appropriately detect seating while improving the durability of the cushion pad 3.

Moreover, in the case of the embodiment, as illustrated in FIG. 5, the pressure sensitive switches SW1 and SW2 are aligned in the longitudinal direction of the cushion pad 3.

Such a tendency is observed that in the case where the pressure sensitive switches SW1 and SW2 are aligned in the lateral direction of the cushion pad 3, a difference is produced between a pressure applied to the pressure sensitive switch near the center of the cushion pad 3 and a pressure applied to the pressure sensitive switch distant from the center. On this point, in the case where the pressure sensitive switches SW1 and SW2 are aligned in the longitudinal direction of the cushion pad 3 as in the embodiment, pressures can be equally applied to the pressure sensitive switches SW1 and SW2 by the recess 50 acting on the pressure sensitive switch for concentrating the pressing force. Thus, it is possible to appropriately detect seating as compared with the case where the pressure sensitive switches SW1 and SW2 are aligned in the lateral direction of the cushion pad 3.

Moreover in the case of the embodiment, the pressure sensitive switches SW1 and SW2 are electrically connected in parallel with each other, as illustrated in FIG. 4.

In the case where this configuration is provided, seating can be detected when any one of the pressure sensitive switches SW1 and SW2 is turned on, so that it is possible to improve the sensitivity of the detection of the seating. Furthermore, even though the pressure sensitive switch SW1 or SW2 is broken, the remaining pressure sensitive switch can detect seating, so that it is possible to provide a longer lifetime for the seating sensor.

In addition, in the case of the embodiment, the insulating sheet portion B1 or B21 (FIG. 2) configuring the pressure sensitive switches SW1 and SW2 disposed on the space of the one recess 50 is joined to the insulating sheet portion B2 or B12 (FIG. 2) configuring the pressure sensitive switches SW3 and SW4 disposed on the space of the other recess 50 through the insulating sheet portions B3 and B13 (FIG. 2). That is, the insulating sheet portion B1 or B21 disposed on the one recess 50 is joined to the insulating sheet portion B2 or B12 disposed on the other recess 50 through the insulating sheet portions B3 and B13 across the recess 50.

In the case where this configuration is provided, the insulating sheet portions B3 and B13 joined across the recess 50 are sandwiched and fixed between the cushion pad 3 and the member (the sheet pan 4) supporting the cushion pad 3, so that it is possible to reduce such an event that the pressure sensitive switches SW1 to SW4 are moved in the recess 50.

The insulating sheet portions B3 and B13 are then joined between the pressure sensitive switches SW1 and SW2 disposed in the one recess 50 and between the pressure sensitive switches SW3 and SW4 disposed in the other recess 50. Thus, it is possible to further reduce such an event that the pressure sensitive switches SW1 to SW4 are moved in the recess 50, as compared with the case where the insulating sheet portions B3 and B13 are not joined between them.

Meanwhile, it is also confirmed from experiments conducted by the present inventor that the difference in the deformed amount is increased between the front portion and the rear portion in the groove to which a pressure is applied from the seating face side as the length of the recess 50 is more increased in the longitudinal direction. Therefore, in the case where the pressure sensitive switches SW1 and SW2 are aligned in the longitudinal direction of the cushion pad 3, from the viewpoint of appropriately detecting seating regardless of the length of the recess 50 in the longitudinal direction, it is more specifically useful that the pressure sensitive switches SW1 and SW2 are electrically connected in parallel with one another.

Moreover, in the case of the embodiment, two separate recesses 50 are formed in the state in which the recesses 50 are not joined to each other, and as illustrated in FIG. 4, the set STA of the pressure sensitive switches SW1 and SW2 disposed on the one recess 50 is electrically connected in serial to the set STB of the pressure sensitive switches SW3 and SW4 disposed on the other recess 50.

In the case where this configuration is provided, seating is not detected until the pressure sensitive switch SW1 or SW2 and the pressure sensitive switch SW3 or SW4 disposed on the recesses 50 respectively are turned on. Thus, it is possible to greatly reduce the detections of seating when a small article or the like is placed on the cushion pad 3. Therefore, it is possible that faulty detections are reduced to further appropriately detect seating.

Moreover, in the case of the embodiment, as illustrated in FIG. 5, two separate recesses 50 in the state in which the recesses 50 are not joined to each other are formed in bilateral symmetry relative to the center of the cushion pad 3 in the crosswise direction.

As described above, the pressure applied to the lower face of the cushion pad caused by seating tends to spread in a band shape in the lateral direction because of the shape of the buttocks even though any cushion pads are used. Moreover, a person takes a seat in the center of the cushion pad in the crosswise direction. On this point, in the case where a plurality of the recess 50 is formed in bilateral symmetry relative to the center of the cushion pad 3 in the crosswise direction as in the embodiment, a pressure can be generally equally applied to the recesses 50, and as a result, it is possible to appropriately detect seating.

### (2) Second Embodiment

Next, a second embodiment preferred to the seat device according to the present invention will be described in detail with reference to the drawings. However, in the components of a seat device according to the second embodiment, the components the same as or equivalent to ones in the first embodiment are designated the same reference numerals and signs, and the overlapping description is appropriately omitted.

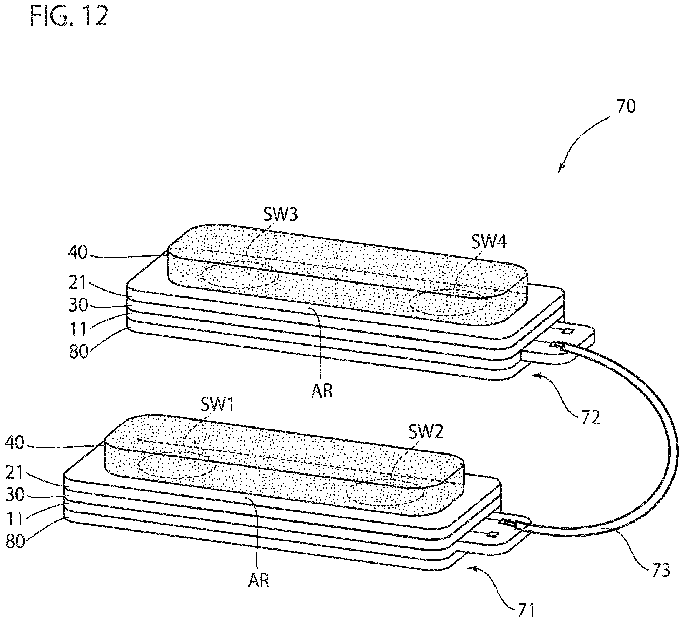

FIG. 12 is a diagram of a seating sensor according to the second embodiment. As illustrated in FIG. 12, the seat device according to the embodiment includes a seating sensor 70 as a component instead of the seating sensor 2 according to the first embodiment.

More specifically, the seating sensor 70 has a configuration in which a first sensor unit 71 is electrically and mechanically connected to a second sensor unit 72 through a cable 73.

In the first sensor unit 71, the main block B1 portion of the first insulating sheet 11, the main block B21 portion of the spacer 30, and the main block B11 portion of the second insulating sheet 21 illustrated in FIG. 2 are attached to one another in this order, and pressure sensitive switches SW1 and SW2 are configured. Moreover, in the second insulating sheet 21, the cushion member 40 is included in the center region on the face on the opposite side of the face facing the spacer 30. Furthermore, in the first insulating sheet 11, a reinforcement member 80 is included on the face on the opposite side of the face facing the spacer 30.

On the other hand, in the second sensor unit 72, the main block B2 portion of the first insulating sheet 11, the main block B22 portion of the spacer 30, and the main block B12 portion of the second insulating sheet 21 illustrated in FIG. 2 are attached to one another in this order, and pressure sensitive switches SW3 and SW4 are configured. Moreover, similarly to the first sensor unit 71, the cushion member 40 is included in the center region on the top face side of the second insulating sheet 21, and the reinforcement member 80 is included on the lower face of the first insulating sheet 11.

The cable 73 is one that a signal line is covered with an insulating member, and more specifically, the cable 73 is a coaxial cable or an electric wire, for example.

It is noted that a set of the pressure sensitive switches SW1 and SW2 is connected in parallel with a set of the pressure sensitive switches SW3 and SW4 similarly to FIG. 4, and the sets are connected in serial to each other through the cable 73 similarly to FIG. 4.

The reinforcement member 80 is a member provided to improve the rigidity of the first electrode sheet 10 more than the rigidity of the second electrode sheet 20. The material of the reinforcement member 80 includes a metal or the like in addition to a resin such as PET, PBT, or PEN. However, from the viewpoint of improving the rigidity of the first electrode sheet 10 more than the rigidity of the second electrode sheet 20, it is preferable to use a reinforcement member 80 made of a material whose rigidity is higher than the rigidity of the material of the second electrode sheet 20.

The thickness of the reinforcement member 80 is not particularly limited. However, from the viewpoint of improving the rigidity of the first electrode sheet 10 more than the rigidity of the second electrode sheet 20, it is preferable to use a reinforcement member 80 whose thickness is greater than the thickness of the second insulating sheet 21.

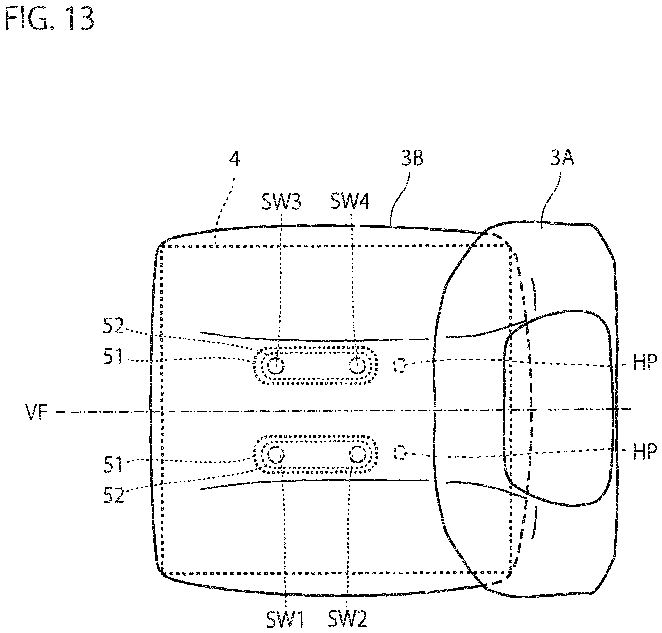

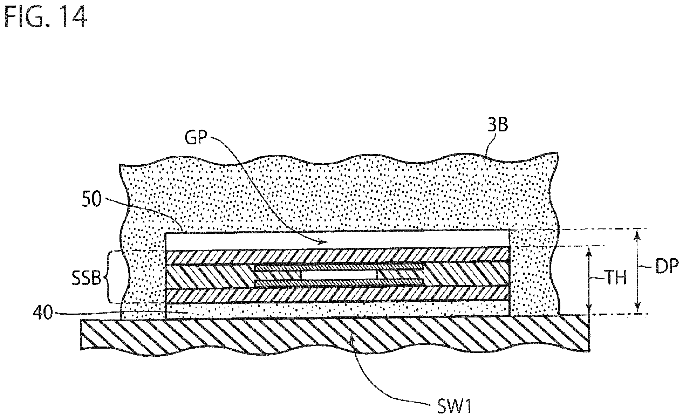

FIG. 13 is a diagram of the seat device according to the second embodiment seen from right above, and FIG. 14 is a diagram of a cross section of the seat device according to the second embodiment seen from a viewpoint the same as the viewpoint in FIG. 6. As illustrated in FIGS. 13 and 14, the seat device according to the embodiment includes a cushion pad 3 having a shallow recess 51 and a deep recess 52 as a component instead of the cushion pad 3 according to the first embodiment including the recess 50.

The shallow recess 51 is a groove formed on the lower face of a seat part 3B as a first stage, which is the same groove as the recess 50 according to the first embodiment, and a sheet structure SSB and the reinforcement member 80 are disposed in a space SP1 of the shallow recess 51.

On the other hand, the deep recess 52 is a groove formed on a part of the bottom of the shallow recess 51 as a second stage, and is formed in the center portion of the bottom of the shallow recess 51 in a width narrower than the width of the shallow recess 51 in the embodiment. The cushion member 40 is disposed in a space SP2 of the deep recess 52 in the state in which a gap GP is provided between the bottom face of the deep recess 52 and the top face of the cushion member 40. It is noted that the gap is provided between the side face of the deep recess 52 and the side face of the cushion member 40 in FIG. 14. However, the side faces may be in the contact state.

On the other hand, to the bottom face of the shallow recess 51 on which the deep recess 52 is not formed, a peripheral region AR (FIG. 12) of the second insulating sheet 21 of the sheet structure SSB is fixed with an adhesive AD. However, the peripheral region AR may be fixed to the bottom face of the shallow recess 51 with a member other than the adhesive AD. For example, the peripheral region AR can be fixed to the bottom face of the shallow recess 51 using a plurality of pins that is penetrated through the portion around the pressure sensitive switch and pierced to the bottom face of the shallow recess 51.

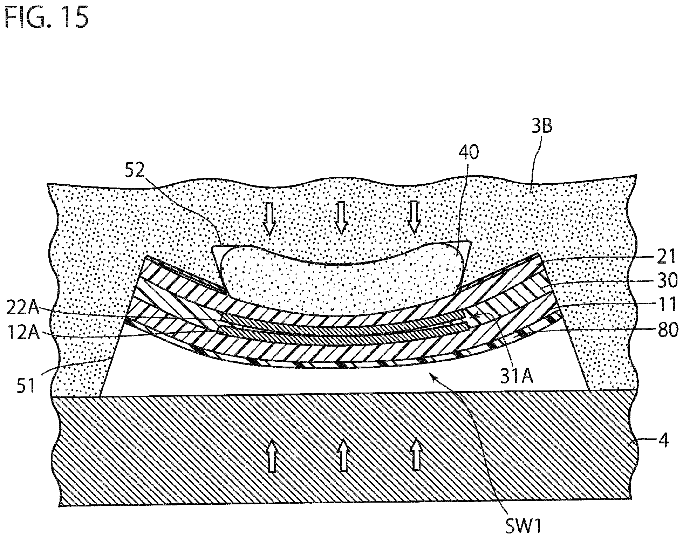

FIG. 15 is a diagram of the pressure sensitive switch SW1 according to the second embodiment that is turned on at a viewpoint the same as the viewpoint in FIG. 14. In the case of the first embodiment, as illustrated in FIG. 11, pressures applied from both of the seat part 3B and a sheet pan 4 are applied as the force pressing the seating sensor 2.

On the other hand, in the case of the embodiment, as illustrated in FIG. 15, a space is provided between the pressure sensitive switches SW1 and the placement face of the sheet pan 4, and the pressure sensitive switch SW1 is in non-contact with respect to the sheet pan 4. Thus, a pressure applied from the sheet pan 4 does not generally act as the force pressing the pressure sensitive switch SW1.

Therefore, in the case where the reinforcement member 80 is not attached to the first insulating sheet 11, the first insulating sheet 11 is also bent as similar to the second insulating sheet 21 when the second insulating sheet 21 is bent. Thus, a distance between the first electrode 12A and the second electrode 22A is almost the same between the case where the insulating sheet is not bent and the case where the insulating sheet is bent, and it is more likely that it is difficult to contact the electrodes with each other.

On this point, the rigidity of the first insulating sheet 11 according to the embodiment is higher than the rigidity of the second electrode sheet 20 because of the reinforcement member 80 attached to the first insulating sheet 11.

Thus, the deformed amount of the first insulating sheet 11 is greatly reduced as compared with the deformed amount of the second insulating sheet 21, and a distance between the first electrode 12A and the second electrode 22A is greatly changed between the case where the insulating sheet is not bent and the case where the insulating sheet is bent. Therefore, the first electrode 12A easily contacts the second electrode 22A even though the pressing force from the seating face side is small, and the sensitivity of the pressure sensitive switch SW1 itself can be improved.

Moreover, in the case of the embodiment, in one face of the second insulating sheet 21, at least a part of the region other than the region that contacts the upper part of the electrode configuring the pressure sensitive switch SW1 is fixed to the bottom face of the shallow recess 51 through the adhesive AD.

Thus, the bottom of the shallow recess 51 functions as a stopper that prevents the seating sensor from moving to the upper part of the cushion pad 3. Therefore, for example, even in the case where the cushion pad 3 moves up and down because of vibrations, for example, it is possible to prevent the pressure sensitive switch SW1 from being turned on because of the up and down motions.

It is noted that the matters described on the pressure sensitive switch SW1 are similarly applicable to the other pressure sensitive switches SW2 to SW4.

In the seat device according to the embodiment as described above, as illustrated in FIG. 14, the shallow recess 51 is formed as the groove extending in the longitudinal direction of the cushion pad 3, and the pressure sensitive switch SW1 is disposed in the space SP1 of the shallow recess 51. Accordingly, the seat device according to the embodiment also exerts the operation and effect similar to the case described in the first embodiment.

### (3) Third Embodiment

Next, a third embodiment preferred to the seat device according to the present invention will be described in detail with reference to the drawings. However, in the components of a seat device according to the third embodiment, the components the same as or equivalent to the embodiments are designated the same reference numerals and signs, and the overlapping description is appropriately omitted.

The seat device according to the third embodiment is different from the seat device 1 according to the first embodiment in that a mounting member different from the sheet pan 4 is included as a component.

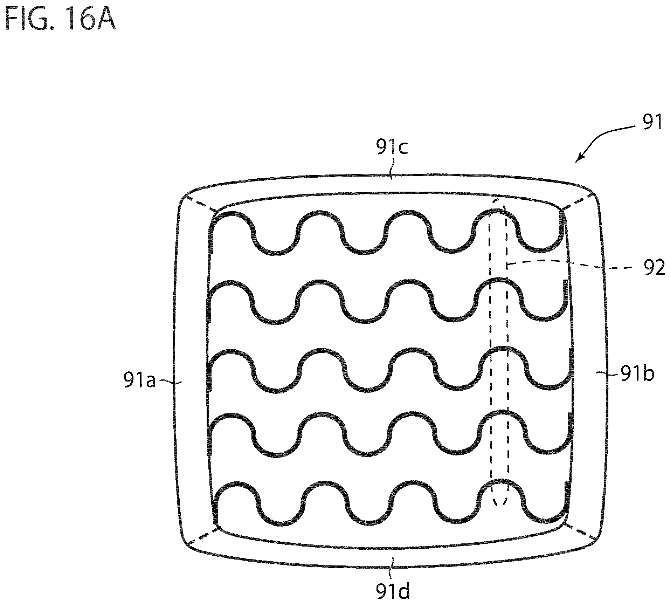

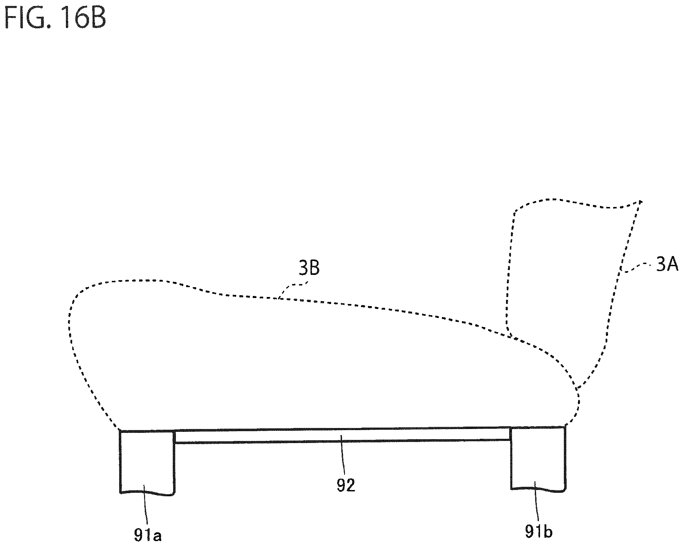

FIGS. 16A and 16B are diagrams of a mounting member according to the third embodiment. As illustrated in FIGS. 16A and 16B, the mounting member according to the embodiment includes a seat frame 91 and a plurality of springs 92.

The seat frame 91 has a frame structure including a front frame member 91a disposed as the frame of a front portion, a rear frame member 91b disposed as the frame of the rear portion, and a pair of side frame members 91c and 91d disposed as the frames of the left portion and the right portion. The seat frame 91 includes an opening surrounded by the frame members 91a to 91d.

The springs 92 are formed of wire materials repeatedly bent in an S-shape on the same plane. The front ends of the springs 92 are mounted on the front frame member 91a, and the rear ends are mounted on the rear frame member 91b. Thus, the plurality of springs 92 extends on the same plane at a predetermined spacing to each other, and configured as a mat for the cushion pad 3.

It is noted that the shape of the portion for the unit for bending the spring 92 is not limited to an S-shape, and various shapes can be adapted including a Z-shape, for example. Moreover, the spacings for repeating the bent portion of the spring 92 may be continued, may be alternate spacings at predetermined gaps, or may be random spacings. Furthermore, the shape of the portion of the bent portion to be repeated may be the same shape, or may be different shapes including the combination of an S-shape and a Z-shape or the combination of reversed shapes of a laid U-shape or a U-shape, for example. In addition, it may be unnecessary to repeat the bent portions. However, it is preferable to repeat the bent portions. It is noted that the plurality of springs 92 extends in the longitudinal direction. However, the plurality of springs 92 may extend in the lateral direction, in the oblique direction, or in directions different from each other.

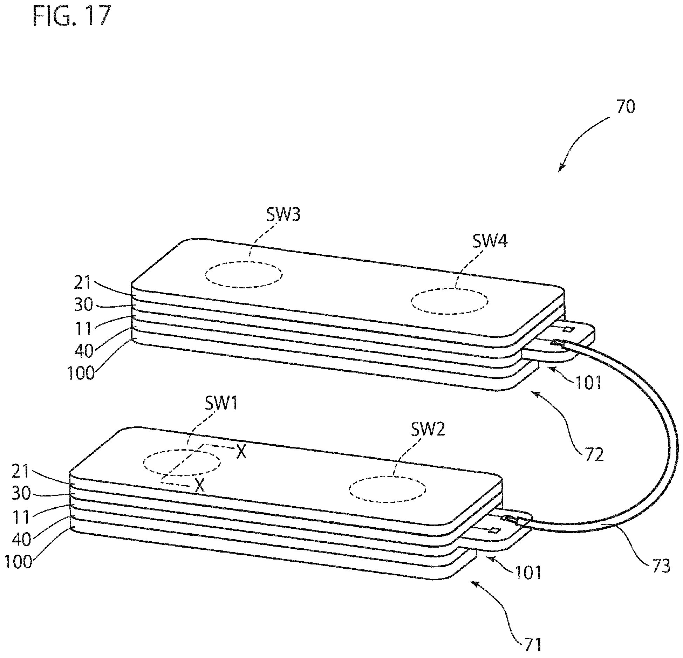

FIG. 17 is a diagram of the configuration of a seating sensor 70 at a viewpoint the same as the viewpoint in FIG. 12. As illustrated in FIG. 17, the seating sensor 70 according to the embodiment is different from the seating sensor 70 according to the second embodiment in that a reinforcement member 100 different from the reinforcement member 80 according to the second embodiment is included on the lower face of the first insulating sheet 11 of a first sensor unit 71 and a second sensor unit 72 as a component. Moreover, the seating sensor 70 according to the embodiment is different from the seating sensor 70 according to the second embodiment in that the cushion member 40 similar to the first embodiment is provided between the reinforcement member 100 and the first insulating sheet 11.

The reinforcement member 100 is different from the reinforcement member 80 according to the second embodiment that is not included in a spring groove 101 in that the spring groove 101 is included on the face on the opposite side of the face facing the first insulating sheet 11. It is noted that the reinforcement member 100 has the same shape and the same size as the shape and size of one face of the first insulating sheet 11, for example, and has the thickness greater than the thickness of the first insulating sheet 11.

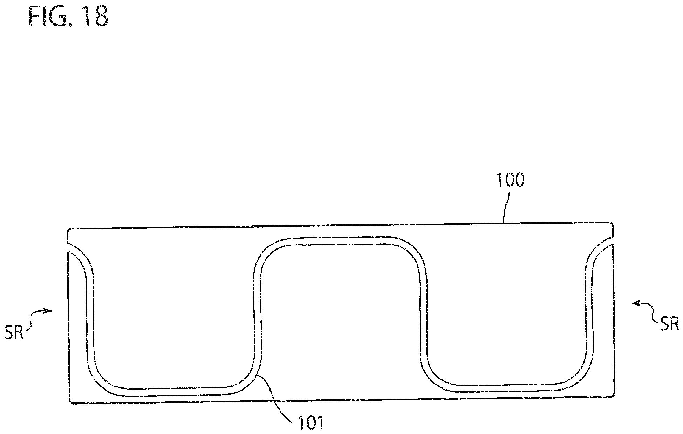

FIG. 18 is a diagram of a face including the spring groove 101 on the reinforcement member 100. The spring groove 101 is in a shape into which the intermediate portion of a single spring 92 can be fit. In the case of the embodiment, as illustrated in FIG. 18, for example, the shape is in a non-linear shape corresponding to the bending pattern of the intermediate portion to be fit into a single spring 92, and the both ends of the spring groove 101 are opened on side faces SR of the reinforcement members 100 opposite to each other.

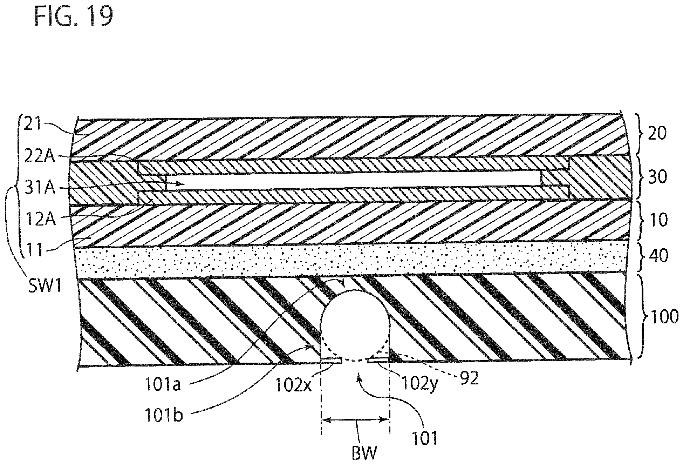

FIG. 19 is a diagram of a cross section taken along line X-X in FIG. 17. As illustrated in FIG. 19, the shape of a bottom portion 101a of the spring groove 101 is the same shape as a semicircle shape of the cross perpendicular section of the spring 92. Thus, in the spring groove 101, the intermediate portion of the spring 92 can be fit into the bottom portion with no gap.

Sides 101b of the spring groove 101 are in parallel with each other, and a distance BW (the width of the spring groove) between the sides 101b is almost the same as the diameter of the spring 92. Thus, the spring groove 101 can control the motion of the spring 92 to the crosswise direction of the groove, and can reduce swings in the horizontal direction with respect to the first sensor unit 71 or the second sensor unit 72.

Moreover, a pair of projections 102x and 102y is joined to the edge of the spring groove 101 in the longitudinal direction, and the projections 102x and 102y project to the edge of the opposite groove. Thus, in the case where the intermediate portion of the spring 92 is fit into the spring groove 101, it is possible to reduce such an event that the spring portion is removed from the spring groove 101.

The projections 102x and 102y are elastic resin plates, for example, and are in the state in which the projections 102x and 102y face to each other apart from the center of the spring groove 101 in the longitudinal direction in the same gap. Thus, the force that the projections 102x and 102y are returned to the original state acts as the force that suppresses the spring portion which is fit into the spring groove 101. As a result, the projections 102x and 102y can greatly reduce such an event that the spring portion is removed from the spring groove 101.

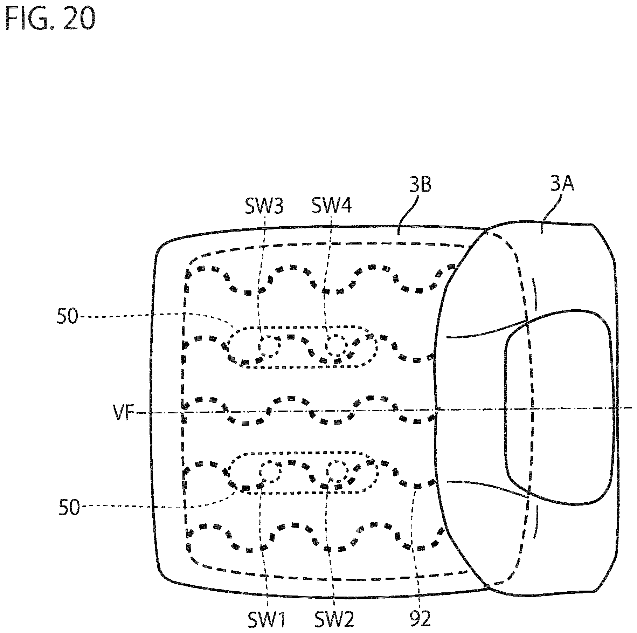

FIG. 20 is a diagram of the seat device according to the third embodiment seen from right above. As illustrated in FIG. 20, the recess 50 formed on the cushion pad 3 according to the embodiment is formed at a the portion including the region that contacts the upper part of the spring 92 extending on the seat frame 91 on the lower face of the seat part 3B.

The first sensor unit 71 and the second sensor unit 72 of the seating sensor 70 according to the embodiment are supported on the intermediate portion of the spring 92 through the reinforcement member 100, which is one of the components, and disposed in the recess 50 formed on the lower face of the seat part 3B that contacts the upper part of the spring portion.

In the case where the first sensor unit 71 and the second sensor unit 72 are supported on the spring 92, which is a wire material, as described above, a tendency is observed that the pressing force applied from the spring 92 becomes unbalanced in the reinforcement member 100, which is the lower part of the first sensor unit 71 and the second sensor unit 72.

On this point, the cushion member 40 is disposed between the reinforcement member 100 and the first insulating sheet 11 according to the embodiment, so that the difference can be relaxed even in the case where the pressing force applied to the reinforcement member 100 becomes unbalanced. Therefore, it is possible to greatly reduce the deterioration of the durability of the seating sensor 70 in association that the pressing force applied to the reinforcement member 100 becomes unbalanced.

As described above, the first sensor unit 71 and the second sensor unit 72 of the seating sensor 70 according to the embodiment are not fixed to the cushion pad 3, and are supported on the spring 92, which is the mounting member for the cushion pad 3, and disposed in the space of the recess 50 on the lower face of the seat part 3B. Even though this configuration is provided, the operation and effect similar to the first embodiment can be obtained.

Moreover, in the case of the embodiment, the reinforcement member 100 is used for the member that improves the rigidity of the first insulating sheet 11 more than the rigidity of the second electrode sheet 20 and improves the sensitivity of the pressure sensitive switch SW1 as well as shared for the member that supports the pressure sensitive switch SW1 on the spring 92. Thus, it is possible to downsize the seat device by the member. In addition to this, the reinforcement member 100 can relax the pressing force applied from the spring 92, which is a wire material, with respect to the first insulating sheet 11, and can suppress the marking of the spring on the first insulating sheet 11 or the breakage of the pressure sensitive switch SW1, for example.

Moreover, in the case of the embodiment, as illustrated in FIG. 20, since the pressure sensitive switches SW1 and SW3 are disposed on the normal of the spring 92, whereas the pressure sensitive switches SW2 and SW4 are disposed on portions that avoid the normal of the spring 92.

Since the pressure sensitive switches SW1 to SW4 have a cross section greater than the diameter of the spring 92, which is a wire material, a greater pressing force is applied to the portions of the pressure sensitive switches SW1 and SW3 on the normal of the spring 92 than in the other portions. In other words, the pressing force against the pressure sensitive switches SW1 and SW3 becomes unbalanced. On the other hand, since the pressure sensitive switches SW2 and SW4 are disposed at positions different from the positions on the normal of the spring 92, the pressing force applied from the spring 92 generally becomes uniform.

Therefore, the deterioration of the durability of the pressure sensitive switches SW2 and SW4 in association with an unbalanced pressing force is greatly reduced as compared with the pressure sensitive switches SW1 and SW3. In contrast, since the pressure sensitive switches SW1 and SW3 are applied with a greater pressing force than in the pressure sensitive switches SW2 and SW4, the sensitivity of the pressure sensitive switch per unit pressing force is improved.

Moreover, in the case of the embodiment, the pressure sensitive switch SW1 disposed on the normal of the spring 92, the pressure sensitive switch SW2 disposed to avoid the position, the pressure sensitive switch SW3 disposed on the normal of the spring 92, and the pressure sensitive switch SW4 disposed to avoid the position are connected in parallel with one another. Accordingly, it is possible to equally obtain both of the advantage in the case where the pressure sensitive switch SW1 or SW3 is disposed on the normal of the spring 92 and the advantage in the case where the pressure sensitive switch SW2 or SW4 is disposed to avoid the position.

### (4) Other Embodiment

As described above, the first embodiment to the third embodiment are described as examples. However, the present invention is not limited to the first embodiment to the third embodiment.

For example, in the foregoing embodiments, the number of the two separate grooves (the recess 50 or the shallow recess 51) is two in the state in which the grooves are not joined to each other. However, the number may be one, or may be three or greater. It is noted that in the case where the number of the grooves is two or more of the even number, it is not essential to form the grooves in bilateral symmetry relative to the vertical plane VF passing through the center of the cushion pad 3 in the crosswise direction as in the foregoing embodiments.

Moreover, in the foregoing embodiments, the number of the pressure sensitive switches is four in the seating sensor 2 or 70. However, the number may be three or less, or may be five or greater. It is noted that in the case where the number of the pressure sensitive switches is two or greater, it is not essential to dispose the pressure sensitive switches as linearly aligned in the longitudinal direction as in the foregoing embodiments.

Furthermore, in the foregoing embodiments, the pressure sensitive switches SW1 and SW3 are disposed on the front side relative to the center of the groove (the recess 50 or the shallow recess 51) formed on the cushion pad 3 in the longitudinal direction, and the pressure sensitive switches SW2 and SW4 are disposed on the rear side. However, the pressure sensitive switches SW1 and SW2 or SW3 and SW4 may be disposed in the center.

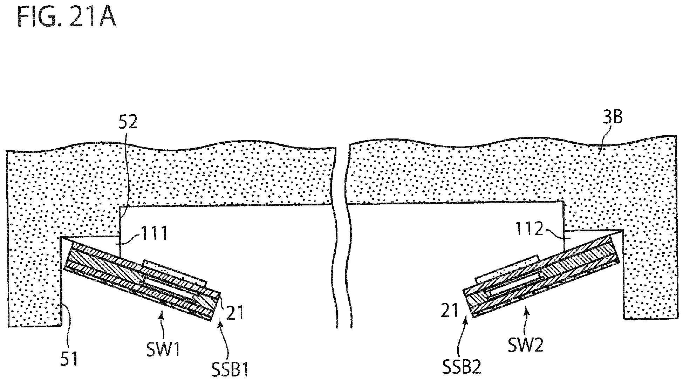

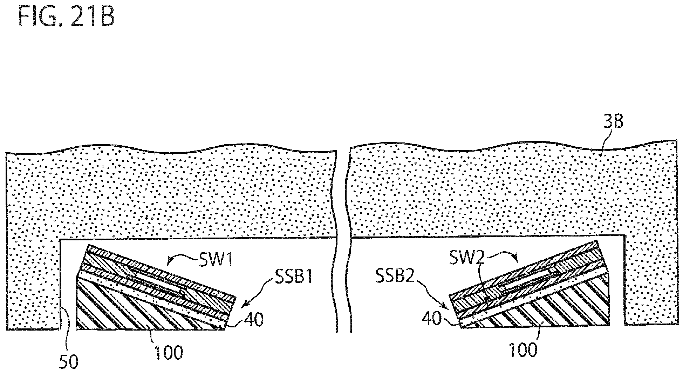

In addition, in the foregoing embodiments, the pressure sensitive switch SW1 or SW2 disposed in the space on the front side or on the rear side is disposed in parallel with the lower face (the opening face of the groove (the shallow recess 51)) of the cushion pad 3 relative to the center of the groove (the recess 50 or the shallow recess 51) in the longitudinal direction. However, the pressure sensitive switch SW1 or SW2 may be obliquely disposed on the center side of the groove in the longitudinal direction with respect to the opening face of the groove (the shallow recess 51) as illustrated in FIGS. 21A and 21B, for example.

FIGS. 21A and 21B are diagrams of longitudinal cross sections of the groove portion of the cushion pad 3 according to the second embodiment. More specifically, FIG. 21A is the longitudinal cross section of the groove portion of the cushion pad 3 according to the first embodiment. A first sensor unit illustrated in FIG. 21A is different from the first sensor unit 71 according to the second embodiment in that the pressure sensitive switches SW1 and SW2 are included as separate sheet structures SSB1 and SSB2. Moreover, a seating sensor illustrated in FIG. 21A is different from the seating sensor 2 or 70 according to the first embodiment in that slope adjusting members 111 and 112 are included as new components. The slope adjusting members 111 and 112 are in a rectangular triangular pyramid shape, and the slopes of the slope adjusting members 111 and 112 are attached to the second insulating sheet 21 configuring the sheet structure SSB1. On the other hand, the long face of the slope adjusting member 111 is attached to the front end portion of the bottom of the shallow recess 51, and the long face of the slope adjusting member 112 is attached to the rear end portion of the bottom of the shallow recess 51. The pressure sensitive switches SW1 and SW2 are obliquely disposed on the center side of the groove in the longitudinal direction with respect to the opening face of the shallow recess 51 using the slope adjusting members 111 and 112. It is noted that the similar thing is applied to the second sensor unit.

On the other hand, FIG. 21B is the longitudinal cross section of the groove portion of the cushion pad 3 according to the third embodiment. A first sensor unit illustrated in FIG. 21B is different from the first sensor unit 71 according to the third embodiment in that the pressure sensitive switches SW1 and SW2 are included as separate sheet structures SSB1 and SSB2. In the sheet structures SSB1 and SSB2, the shape of the reinforcement member 100 configuring the sheet structure is in a rectangular triangular pyramid shape, and the slope of the reinforcement member 100 is attached to the cushion member 40. Moreover, the long face of the reinforcement member 100 of the sheet structure SSB1 is formed with a spring groove that supports the sheet structure SSB1 on the front side of the shallow recess 51, and the long face of the reinforcement member 100 of the sheet structure SSB2 is formed with a spring groove that supports the sheet structure SSB1 on the rear side of the shallow recess 51. Thus, the pressure sensitive switches SW1 and SW2 are obliquely disposed on the center side of the groove in the longitudinal direction with respect to the opening face of the shallow recess 51. It is noted that the similar thing is applied to the second sensor unit.

The groove (the recess 50 or the shallow recess 51) formed on the lower face of the seat part 3B according to the foregoing embodiments is a vertical type provided on the inner side with respect to the peripheral portion of the seat part 3B and extending in the longitudinal direction of the seat part 3B. Thus, in the case where a pressure is applied to the cushion pad 3, the groove bottom is roughly bent so as to tilt from the front end portion or the rear end portion to the center portion. Thus, in the case where the pressure sensitive switch is obliquely tilted on the center side of the groove in the longitudinal direction with respect to the opening face of the groove, the sheet face of the second insulating sheet 21, which is the upper part of the pressure sensitive switch, can be generally faced to the bottom face of the groove bottom when a pressure is applied to the cushion pad 3. Therefore, it is possible to greatly reduce the fluctuation of the pressing force applied from the groove portion of the cushion pad 3 to the pressure sensitive switch SW1 or SW2, as compared with the case where the pressure sensitive switch SW1 or SW2 is not tilted.

Moreover, in the foregoing embodiments, two pressure sensitive switches SW1 and SW2 or SW3 and SW4 are disposed for a single separate groove in the state in which the pressure sensitive switches SW1 and SW2 or SW3 and SW4 are not joined to each other. However, a single pressure sensitive switch or three pressure sensitive switches or more may be disposed for a single groove. It is noted that different numbers of the pressure sensitive switches may be disposed for the individual grooves.

Furthermore, in the foregoing embodiments, the shape and size of the first electrodes 12A and 12B are matched with the shape and size of the second electrodes 22A and 22B, and the electrodes are completely laid over with one another. However, the size, shape, or the like may be different between the first electrodes 12A and 12B and the second electrodes 22A and 22B as long as the size, shape, or the like is within the range that the pressing force can be detected. It is noted that the similar thing is applied to the other first electrodes and the other second electrodes.

In addition, in the foregoing embodiments, the sizes of the openings 31A to 31D are the same. However, the openings may have two types or more of sizes. In the case where this configuration is provided, the insulating sheet of the pressure sensitive switch including a larger opening is more likely to be bent than in the insulating sheet of the pressure sensitive switch including a smaller opening, and the sensitivity of the pressure sensitive switch including a larger opening is more improved than in the sensitivity of the pressure sensitive switch including a smaller opening. Therefore, for example, in the case where there are pressure sensitive switches disposed in the space on the front side of the groove and in the space on the rear side relative to the center of the groove in the longitudinal direction, the fluctuation of the sensitivities of the pressure sensitive switches can be suppressed by varying the sizes of the openings of the pressure sensitive switches. It is noted that the diameters of the openings 31A to 31D are slightly smaller than the diameters of the first electrodes 12A to 12D. However, the diameters may be the diameters of the first electrodes 12A to 12D or greater.

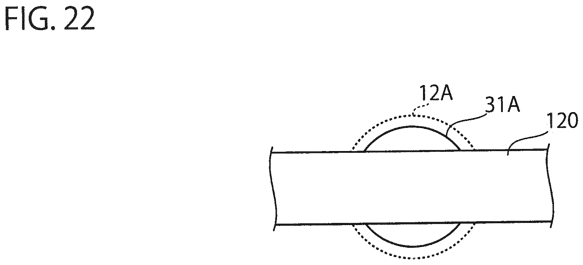

Moreover, in the first embodiment and the third embodiment, the cushion member 40 that collectively covers the openings 31A and 31B of the spacer 30 through the first insulating sheet 11 is adapted. On the other hand, in the second embodiment, the cushion member 40 that collectively covers the openings 31A and 31B of the spacer 30 through the second insulating sheet 21 is adapted. However, cushion members that individually cover the openings 31A and 31B may be adapted. Furthermore, for example, as illustrated in FIG. 22, a cushion member 120 that partially covers the opening 31 may be adapted. Alternatively, although not illustrated in the drawing, a cushion member that partially covers the opening 31A and covers the entire opening 31B other than the opening 31A may be adapted. In short, the cushion member may be one that covers at least a part of the opening through the insulating sheet. It is noted that as described above, in the case where openings in two types or more of sizes are adapted, the sensitivities of the pressure sensitive switches SW1 and SW2 can be adjusted by varying the ratio of the cushion member covering the opening (the amount of the cushion member blocking the opening) individually for different types of openings. More specifically, even though the applied pressing force is different between the pressure sensitive switches SW1 and SW2, it is possible to improve the uniformity (the balance) that the pressure sensitive switches SW1 and SW2 are turned into the ON-state.

Furthermore, in the foregoing embodiments, the reinforcement member 80 or 100 is provided for improving the rigidity of the first electrode sheet 10 more than the rigidity of the second electrode sheet 20. However, the reinforcement member 80 or 100 may be omitted. It is noted that in the case where the reinforcement member 80 or 100 is omitted, it is preferable to improve the rigidity of the first electrode sheet 10 more than the rigidity of the second electrode sheet 20 by configuring the first electrode sheet 10 using a material whose rigidity is higher than the rigidity of the material of the second electrode sheet 20, or by configuring the first electrode sheet 10 in the thickness greater than the thickness of the second electrode sheet 20.

In addition, in the foregoing embodiments, the shapes of the first electrode sheet 10, the second electrode sheet 20, the spacer 30, the cushion member 40, and the reinforcement members 80 and 100 are not limited to the foregoing embodiments, and various shapes can be adapted. Moreover, the shapes of the first electrodes 12A and 12B, the second electrodes 22A and 22B, the openings 31A and 31B, the cushion pad 3, the groove (the shallow recess 51 or the deep recess 52), and the sheet pan 4 are not limited to the foregoing embodiments as well, and various shapes can be adapted.

Furthermore, in the second embodiment, the first sensor unit 71 or the second sensor unit 72 is supported on a single spring 92. However, the first sensor unit 71 or the second sensor unit 72 may be supported on the upper part between two springs 92. More specifically, the supporting portion is a portion including a region that contacts the upper part between two springs 92 in which the shallow recess 51 is formed on the portion including the region that contacts the upper part of a single spring 92 on the lower face of the cushion pad 3. Furthermore, the reinforcement member 100 in the same size as the size of the first insulating sheet 11 is greater than the distance between the two springs 92. In addition, the spring groove 101 into which the intermediate portion of a single spring 92 can be fit and which is formed on the reinforcement member 100 is one into which the intermediate portions of the two springs 92 can be fit. With this configuration, it is possible to support the first sensor unit 71 or the second sensor unit 72 of the shallow recess 51 on the upper part between the two springs 92 through the reinforcement member 100 across the two springs 92.

It is noted that the components of the seat device can be appropriately combined, omitted, modified, and added with known techniques, for example, other than the content described in the first embodiment to the third embodiment or the other embodiments within the scope not deviating from the objet of the present application, as long as the resulting subject-matter corresponds to the seat device defined by the claims.

### Industrial Applicability

The present invention is applicable to the seats of conveyances such as a vehicle, and specifically applicable to a seat to wear a seat belt.

### Reference Signs List

1 ... seat device
2 and 70 ... seating sensor
3 ... cushion pad
3A ... backrest part
3B ... seat part
4 ... sheet pan
10 ... first electrode sheet
11 ... first insulating sheet
12A to 12D ... first electrode
13A and 13B ... terminal
14A to 14D ... wire
20 ... second electrode sheet
21 ... second insulating sheet
22A to 22D ... second electrode
24A to 24D ... second wire
30 ... spacer
31A to 31D ... opening
32A to 32D ... slit
40 and 120 ... cushion member
50 ... recess
51 ... shallow recess
52 ... deep recess
80 and 100 ... reinforcement member
91 ... seat frame
92 ... spring
101 ... spring groove
111 and 112 ... adjusting member
SW1 to SW4 ... pressure sensitive switch

## Claims

1. A seat device (1) comprising:
a cushion pad (3); and
a plurality of pressure sensitive switches (SW1, SW2, SW3, SW4) configured to detect a load applied from a seating face of the cushion pad (3), wherein:
a lower face of the cushion pad (3) is formed with a groove (50, 51, 52) for concentrating pressing force that collects a pressure applied to the cushion pad (3);
the pressure sensitive switches are disposed in a space of the groove; and
in the groove (50, 51, 52), when a width of the groove (50, 51, 52) in a direction the same as a direction orthogonal to a longitudinal direction of the cushion pad (3) is defined as one, a ratio of a length of the groove (50, 51, 52) in a direction the same as the longitudinal direction of the cushion pad (3) is defined as two or greater, and a pressure propagates through the length direction of the groove (50, 51, 52) and acts on the pressure sensitive switches (SW1, SW2, SW3, SW4);
wherein the groove (50, 51, 52) is disposed in a region located on the inner side with respect to the peripheral portion of the bottom face of the cushion pad (3);
wherein a gap (GP) is formed between the groove (50, 51, 52) and the pressure sensitive switches (SW1, SW2, SW3, SW4);
the seat device being **characterized in that** the gap is continuously formed in a same thickness from one of the pressure sensitive switches (SW1, SW3) to another one of the pressure sensitive switches (SW2, SW4).

2. The seat device according to claim 1, wherein:
the plurality of the pressure sensitive switches is aligned in the longitudinal direction of the cushion pad and disposed in the space of the groove; and
the plurality of the pressure sensitive switches is electrically connected in parallel with each other.

3. The seat device (1) according to any one of claims 1 to 2, wherein:
a plurality of the grooves (50, 51, 52) is formed; and
one or a plurality of the pressure sensitive switches (SW1, SW2, SW3, SW4) is disposed in spaces of the grooves (50, 51, 52).

4. The seat device (1) according to claim 3, wherein:
one or a plurality of the pressure sensitive switches (SW1, SW2, SW3, SW4) disposed in a space of one of the grooves (50, 51, 52) is formed in a set; and
the sets are electrically connected in serial to each other.

5. The seat device (1) according to claim 3 or 4, wherein:
the pressure sensitive switches (SW1, SW2, SW3, SW4) include an insulating sheet (11, 21);
the plurality of the grooves (50, 51, 52) is formed in a state in which the grooves (50, 51, 52) are not joined to each other; and
the insulating sheets (11, 21) of the pressure sensitive switches (SW1, SW2, SW3, SW4) individually disposed in the spaces of the grooves (50, 51, 52) are joined to each other across the grooves (50, 51, 52).

6. The seat device (1) according to any one of claims 3 to 5, wherein the plurality of the grooves (50, 51, 52) is formed in bilateral symmetry relative to a vertical plane passing through a center in a direction orthogonal to the longitudinal direction of the cushion pad (3).

7. The seat device (1) according to claim 1, wherein the gap (GP) is continuously formed from one end to the other end in the longitudinal direction of the cushion pad (3) in the groove (50, 51, 52).

8. The seat device (1) according to claim 7, wherein a plurality of the pressure sensitive switches (SW1, SW2, SW3, SW4) is disposed in a space of the groove (50, 51, 52), and the gap (GP) is continuously formed over the plurality of pressure sensitive switches (SW1, SW2, SW3, SW4).

## Patentansprüche

1. Eine Sitzvorrichtung (1) umfassend:
eine Kissenauflage (3); und
eine Vielzahl von druckempfindlichen Schalter (SW1, SW2, SW3, SW4), die konfiguriert sind, um eine von einer Sitzfläche der Kissenauflage (3) aufgebrachte Last zu erfassen, wobei:
eine Unterseite der Kissenauflage (3) ist mit einer Nut (50, 51, 52) zum Konzentrieren der Druckkraft ausgebildet, die einen auf die Kissenauflage (3) ausgeübten Druck sammelt;
die druckempfindlichen Schalter sind in einem Bereich der Nut angeordnet, und
in der Nut (50, 51, 52), wenn eine Breite der Nut (50, 51, 52) in einer Richtung gleich einer Richtung orthogonal zu einer Längsrichtung der Kissenauflage (3) als eins definiert ist, ist ein Verhältnis einer Länge der Nut (50, 51, 52) in einer Richtung, die der Längsrichtung der Kissenauflage (3) als zwei oder mehr definiert, und ein Druck breitet sich durch die Längenrichtung der Nut (50, 51, 52) aus und wirkt auf die druckempfindlichen Schalter (SW1, SW2, SW3, SW4); wobei
die Nut (50, 51, 52) in einem Bereich angeordnet ist, der sich auf der Innenseite in Bezug auf den Umfangsabschnitt der Unterseite der Kissenauflage (3) befindet; wobei
zwischen der Nut (50, 51, 52) und den druckempfindlichen Schaltern (SW1, SW2, SW3, SW4) ein Spalt (GP) gebildet ist;
die Sitzvorrichtung ist
**darin gekennzeichnet dass**
der Spalt kontinuierlich in der gleichen Dicke von einem der druckempfindlichen Schalter (SW1, SW3) zu einem anderen der druckempfindlichen Schalter (SW2, SW4) gebildet ist.

2. Die Sitzvorrichtung gemäß Anspruch 1, wobei:
die Vielzahl der druckempfindlichen Schalter in Längsrichtung der Kissenauflage ausgerichtet und in dem Bereich der Nut angeordnet sind und
die Vielzahl der druckempfindlichen Schalter elektrisch parallel zueinander geschaltet sind.

3. Die Sitzvorrichtung gemäß einem der Ansprüche 1 bis 2, wobei:
eine Vielzahl der Nuten (50, 51, 52) gebildet ist; und
einer oder eine Vielzahl der druckempfindlichen Schalter (SW1, SW2, SW3, SW4) in Bereichen der Nuten (50, 51, 52) angeordnet sind.

4. Die Sitzvorrichtung gemäß Anspruch 3, wobei:
einer oder eine Vielzahl der druckempfindlichen Schalter (SW1, SW2, SW3, SW4), die in einem Bereich von einer der Nuten (50, 51, 52) angeordnet sind, sind in einem Set ausgebildet; und
die Sets sind miteinander elektrisch in Reihe verbunden.

5. Die Sitzvorrichtung gemäß Anspruch 3 oder 4, wobei:
die druckempfindlichen Schalter (SW1, SW2, SW3, SW4) eine Isolierfolie (11, 21) enthalten;
die Vielzahl der Nuten (50, 51, 52) ist in einem Zustand ausgebildet, in dem die Nuten (50, 51, 52) nicht miteinander verbunden sind; und
die Isolierbleche (11, 21) der druckempfindlichen Schalter (SW1, SW2, SW3, SW4), die einzeln in den Bereichen der Nuten (50, 51, 52) angeordnet sind, sind entlang die Nuten (50, 51, 5) miteinander verbunden. 52).

6. Die Sitzvorrichtung gemäß einem der Ansprüche 3 bis 5, wobei:
die Vielzahl der Nuten (50, 51, 52) in bilateraler Symmetrie relativ zu einer vertikalen Ebene ausgebildet ist, die durch ein Zentrum in einer Richtung verläuft, die orthogonal zur Längsrichtung der Kissenauflage (3) ist.

7. Die Sitzvorrichtung gemäß Anspruch 1, wobei:
der Spalt (GP) kontinuierlich von einem Ende zum anderen Ende in Längsrichtung der Kissenauflage (3) in der Nut (50, 51, 52) ausgebildet ist.

8. Die Sitzvorrichtung gemäß Anspruch 7, wobei:
eine Vielzahl der druckempfindlichen Schalter (SW1, SW2, SW3, SW4) ist in einem Bereich der Nut (50, 51, 52) angeordnet, und der Spalt (GP) ist kontinuierlich über die Vielzahl der druckempfindlichen Schalter (SW1, SW2, SW3, SW4) ausgebildet.

## Revendications

1. Dispositif de siège (1) comprenant :
un coussin (3) ; et
une pluralité d'interrupteurs sensibles à la pression (SW1, SW2, SW3, SW4) configurés pour détecter une charge appliquée à une face d'assise du coussin (3), dans lequel :
une face inférieure du coussin (3) est conformée avec une rainure (50, 51, 52) pour concentrer la force de compression qui collecte une pression appliquée au coussin (3) ;
les interrupteurs sensibles à la pression sont disposés dans un espace de la rainure ; et
dans la rainure (50, 51, 52), quand la largeur de la rainure (50, 51, 52) dans une direction identique à une direction orthogonale à la direction longitudinale du coussin (3) est définie comme étant égale à un, le ratio de la longueur de la rainure (50, 51, 52) dans une direction identique à la direction longitudinale du coussin (3) est défini comme étant supérieur ou égal à deux, et la pression se propage en direction de la longueur de la rainure (50, 51, 52) et agit sur les interrupteurs sensibles à la pression (SW1, SW2, SW3, SW4) ;
dans lequel la rainure (50, 51, 52) est disposée dans une région située sur le côté interne par rapport à la portion périphérique de la face inférieure du coussin (3) ;
dans lequel un intervalle (GP) est formé entre la rainure (50, 51, 52) et les interrupteurs sensibles à la pression (SW1, SW2, SW3, SW4) ;
le dispositif de siège étant **caractérisé en ce que** l'intervalle est conformé de manière continue avec une même épaisseur d'un des interrupteurs sensibles à la pression (SW1, SW3) à un autre des interrupteurs sensibles à la pression (SW2, SW4).

2. Dispositif de siège selon la revendication 1, dans lequel :
les interrupteurs de la pluralité d'interrupteurs sensibles à la pression sont alignés en direction longitudinale du coussin et disposés dans l'espace de la rainure ; et
les interrupteurs de la pluralité d'interrupteurs sensibles à la pression sont connectés électriquement en parallèle.

3. Dispositif de siège (1) selon l'une quelconque des revendications 1 et 2, dans lequel :
une pluralité de rainures (50, 51, 52) est formée ; et
un interrupteur ou une pluralité d'interrupteurs sensibles à la pression (SW1, SW2, SW3, SW4) sont disposés dans des espaces des rainures (50, 51, 52).

4. Dispositif de siège (1) selon la revendication 3, dans lequel :
un interrupteur ou une pluralité d'interrupteurs sensibles à la pression (SW1, SW2, SW3, SW4) disposés dans un espace d'une des rainures (50, 51, 52) sont conformés comme un ensemble ; et
les ensembles sont connectés électriquement en série.

5. Dispositif de siège (1) selon la revendication 3 ou 4, dans lequel :
les interrupteurs sensibles à la pression (SW1, SW2, SW3, SW4) comprennent une feuille isolante (11, 21) ;
la pluralité de rainures (50, 51, 52) est formée dans un état où les rainures (50, 51, 52) ne sont pas jointes entre elles ; et
les feuilles isolantes (11, 21) des interrupteurs sensibles à la pression (SW1, SW2, SW3, SW4) disposées individuellement dans les espaces des rainures (50, 51, 52) sont jointes entre elles sur la largeur des rainures (50, 51, 52).

6. Dispositif de siège (1) selon l'une quelconque des revendications 3 à 5, dans lequel la pluralité de rainures (50, 51, 52) est formée avec une symétrie bilatérale par rapport à un plan vertical passant par un centre dans une direction orthogonale à la direction longitudinale du coussin (3).

7. Dispositif de siège (1) selon la revendication 1, dans lequel l'intervalle (GP) est formé de manière continue d'une extrémité à l'autre extrémité en direction longitudinale du coussin (3) dans la rainure (50, 51, 52).

8. Dispositif de siège (1) selon la revendication 7, dans lequel une pluralité d'interrupteurs sensibles à la pression (SW1, SW2, SW3, SW4) est disposée dans un espace de la rainure (50, 51, 52), et l'intervalle (GP) est formé de manière continue sur la pluralité d'interrupteurs sensibles à la pression (SW1, SW2, SW3, SW4).
